# EUROPEAN PATENT APPLICATION

(11) **EP 4 821 781 A1**
(43) Date of publication of application: **14.10.2026**
(21) Application number: 24900944.0
(22) Date of filing: 25.11.2024
(51) Int. Cl.: B60W 50/14, B60W 40/08, B60W 60/00, G08B 21/02, G06V 40/10

(54) **VEHICLE ELECTRONIC DEVICE FOR PROVIDING GUIDE FOR PROTECTING DRIVER BY DETECTING RESPIRATION OF DRIVER AND OPERATING METHOD THEREOF**

(30) Priority: 05.12.2023 KR 20230174928; 05.01.2024 KR 20240002333
(71) Applicant: Samsung Electronics Co., Ltd., Suwon-si, Gyeonggi-do 16677 (KR)
(72) Inventor: KIM, Junhong, Suwon-si, Gyeonggi-do 16677 (KR); KIM, Taehoon, Suwon-si, Gyeonggi-do 16677 (KR); KIM, Hyewon, Suwon-si, Gyeonggi-do 16677 (KR)
(74) Representative: Gulde & Partner
(86) International application number: PCT/KR2024/018759
(87) International publication number: WO 2025/121757

(57) **Abstract**

Provided are an electronic device for monitoring respiration of a vehicle driver and providing a respiration guide for driver protection when abnormal respiration is detected, and an operating method thereof. The electronic device may obtain a respiration signal of a driver by detecting the movement of at least one of the chest and abdomen by the respiration of the driver from an image obtained through a camera, detect abnormal respiration including at least one of hyperventilation, hypoventilation, transient apnea, and dyspnea by monitoring a respiration signal in real time, and display a respiration guide user interface (UI) which provides a respiration exercise guide to realign respiration of the driver and relieve abnormal respiration on the basis of the detection of abnormal respiration.

## Description

### Technical Field

The present disclosure relates to a vehicle electronic device and an operating method thereof, which detect respiration of a vehicle driver and provide respiration guide information for driver protection when abnormal respiration is detected. In detail, the present disclosure discloses an electronic device and an operating method thereof, which monitor a respiration signal of a driver (or passenger) through an occupant monitoring system (OMS) including a camera placed in a vehicle and provides the driver with respiration exercise guide information.

### Background Art

An occupant monitoring system (OMS) is a system that recognizes a driver's face from an image obtained by photographing not only the driver but also passengers by using a camera to perform an operation such as warning about drowsy driving or the driver's state or is utilized in an intelligent speed assist system, a reverse assist system, an event data recorder (EDR), or an emergency braking system.

Recently, legislation has been enacted worldwide to mandate the installation of OMSs in vehicles for the purpose of driver protection and prevention of road traffic accidents. In particular, the number of traffic accident fatalities in the European Union has decreased significantly due to the use of OMSs. Accordingly, the European Commission has set a goal to reduce the number of traffic accident fatalities by half by 2030 and has reviewed methods to actively utilize the OMSs. Similar laws are expected to be implemented in countries such as the United States, China, and Australia, and Korea has also considered legislation to mandate the installation of OMSs in vehicles.

Automakers have attempted to equip their vehicles with driver state understanding technologies to not only detect drowsy or inattentive driving, but also to advance autonomous driving and safety technologies. As part of driver state understanding technology, there is a need for technology that monitors the respiration of the driver (or passengers) by using an OMS and detects abnormal respiration outside a normal range, thereby protecting the driver (or passengers) from abnormal respiration and preventing traffic accidents.

### Disclosure of Invention

### Solution to Problem

An aspect of the present disclosure provides a method by which an electronic device mounted in a vehicle detects respiration of a driver of the vehicle and provides a respiration guide for driver protection. An operating method of the electronic device according to an embodiment of the present disclosure may include detecting movement of at least one of the chest and the abdomen caused by the respiration of the driver from an image obtained through a camera to obtain a respiration signal of the driver. The operating method of the electronic device according to an embodiment of the present disclosure may include detecting abnormal respiration including at least one of hyperventilation, hypopnea, transient apnea, and dyspnea by monitoring the obtained respiration signal in real time. The operating method of the electronic device according to an embodiment of the present disclosure may include displaying a respiration guide user interface (UI) that provides a respiration exercise guide to alleviate abnormal respiration by readjusting respiration of the driver as abnormal respiration is detected.

An aspect of the present disclosure provides an electronic device in a vehicle that detects respiration of the driver and provides a guide for driver protection. An electronic device according to an embodiment of the present disclosure may include a display, a camera that photographs a driver to obtain an image, memory that stores at least one instruction, and at least one processor that executes at least one instruction. The at least one processor may detect movement of at least one of the chest and abdomen, caused by respiration of a driver, from an image obtained through a camera and obtain a respiration signal of the driver. The at least one processor may monitor the obtained respiration signal in real time to detect abnormal respiration including at least one of hyperventilation, hypopnea, transient apnea, and dyspnea. The at least one processor may display a respiration guide user interface (UI) that provides a respiration exercise guide to alleviate abnormal respiration by readjusting respiration of the driver as abnormal respiration is detected.

An aspect of the present disclosure provides a computer program product including a computer-readable storage medium. For the electronic device to perform an operation of detecting movement of at least one of the chest and the abdomen caused by respiration of the driver of the vehicle from an image obtained through the camera to obtain a respiration signal of the driver, an operation of monitoring the obtained respiration signal in real time to detect abnormal respiration including at least one of hyperventilation, hypopnea, transient apnea, and dyspnea, and the operation of displaying a respiration guide user interface (UI) that provides a respiration exercise guide to alleviate abnormal respiration by readjusting the respiration of the driver as abnormal respiration is detected, the storage medium may include instructions readable by the electronic device.

### Brief Description of Drawings

The present disclosure may be easily understood from a combination of the following detailed description and the accompanying drawings, where reference numerals denote structural elements.
FIG. 1 is a diagram illustrating an operation in which an electronic device detects respiration of a driver and provides a respiration exercise guide user interface (UI), according to an embodiment of the present disclosure.
FIG. 2 is a flowchart illustrating a method by which an electronic device detects respiration of a driver and provides a respiration guide UI, according to an embodiment of the present disclosure.
FIG. 3 is a block diagram illustrating components of an electronic device according to an embodiment of the present disclosure.
FIG. 4 is a flowchart illustrating a method by which an electronic device obtains a respiration signal of a driver, according to an embodiment of the present disclosure.
FIG. 5 is a diagram illustrating an operation in which an electronic device obtains a respiration signal from at least one area of a chest and an abdomen that are identified based on feature points of both shoulders of the driver, according to an embodiment of the present disclosure.
FIG. 6 is a flowchart illustrating a method by which an electronic device obtains a respiration signal of a driver, according to an embodiment of the present disclosure.
FIG. 7 is a diagram illustrating an operation in which an electronic device obtains a respiration signal from at least one area of a chest and an abdomen that are identified based on feature points of both shoulders and feature points of both pelvis of the driver, according to an embodiment of the present disclosure.
FIG. 8 is a flowchart illustrating a method by which an electronic device obtains a respiration signal of a driver, according to an embodiment of the present disclosure.
FIG. 9 is a diagram illustrating an operation in which an electronic device obtains a respiration signal from a valid area excluding a seat belt from the entire area of an image of a driver, according to an embodiment of the present disclosure.
FIG. 10 is a flowchart illustrating a method by which an electronic device selects a certain area among a plurality of areas included in a body part of a driver to obtain a respiration signal, according to an embodiment of the present disclosure.
FIG. 11 is a diagram for explaining an operation in which an electronic device selects a certain area among a plurality of areas included in a body part of a driver to obtain a respiration signal, according to an embodiment of the present disclosure.
FIG. 12 is a flowchart illustrating a method by which an electronic device corrects a respiration signal based on motion information resulting from vehicle vibration or body movement of a driver, according to an embodiment of the present disclosure.
FIG. 13 illustrates graphs for explaining an operation in which an electronic device corrects a respiration signal based on motion information resulting from vehicle vibration or body movement of a driver, according to an embodiment of the present disclosure.
FIG. 14 is a flowchart illustrating a method by which an electronic device detects abnormal respiration based on rest respiration, according to an embodiment of the present disclosure.
FIG. 15A is a diagram illustrating an operation in which an electronic device displays a respiration guide UI, according to an embodiment of the present disclosure.
FIG. 15B is a diagram illustrating an operation in which an electronic device displays a respiration guide UI, according to an embodiment of the present disclosure.
FIG. 16 is a diagram illustrating an operation in which an electronic device outputs an alert message when abnormal respiration is detected, according to an embodiment of the present disclosure.
FIG. 17 is a diagram illustrating an operation in which an electronic device displays along with a respiration waveform representing thoracic respiration and abdominal respiration of a driver and a respiration guide UI, according to an embodiment of the present disclosure.
FIG. 18 is a diagram illustrating an operation in which an electronic device displays a change amount of each of the thoracic respiration and abdominal respiration of the driver, according to an embodiment of the present disclosure.
FIG. 19 is a flowchart illustrating a method by which an electronic device protects a driver when hyperventilation is detected, according to an embodiment of the present disclosure.
FIG. 20 is a diagram for explaining an operation in which an electronic device protects a driver when hyperventilation is detected, according to an embodiment of the present disclosure.
FIG. 21 is a block diagram illustrating an operation in which an electronic device controls devices included in a vehicle when abnormal respiration of a driver is detected, according to an embodiment of the present disclosure.
FIG. 22 is a diagram illustrating an operation performed by an electronic device by using artificial intelligence technology, according to the present disclosure.
FIG. 23 is a diagram illustrating an electronic device in conjunction with a server, according to a described embodiment of the present disclosure.
FIG. 24 is a diagram for describing FIG. 23 in detail.

### Mode of the Invention

The terms used in embodiments of the specification are selected from the most widely used general terms possible while considering the functions of the present disclosure, but may vary depending on the intention of engineers in the field, precedents, the emergence of new technologies, and the like. In certain cases, there are terms arbitrarily selected by the applicant, and in such cases, their meanings are described in detail in the corresponding description of an embodiment of the present disclosure. Therefore, the terms used in the present disclosure need to be defined based on the meaning of the terms and the overall content of the present disclosure, rather than simply the names of the terms.

Singular expressions include plural expressions unless context clearly indicates otherwise. All terms including technical and scientific terms used in the specification have the same meaning as commonly understood by those of skill in the art to which the present disclosure belongs.

Throughout the present disclosure, unless explicitly described to the contrary, the word "comprise" or "include" and variations such as "comprises" or "includes" or "comprising" or "including", will be understood to imply the inclusion of stated elements but not the exclusion of any other elements. The terms such as "...unit" or "module" disclosed in the present disclosure mean units for processing at least one function or operation, which may be implemented by hardware, software, or a combination thereof.

According to the situation, the expression "configured to" used in the present disclosure may be used as, for example, the expression "suitable for", "having the capacity to", "designed to", "adapted to", "made to", or "capable of". The term "configured to" must not mean only "specifically designed to" in hardware. Instead, the expression "a system configured to" may mean that the device is "capable of" operating along with another device or other components. For example, a "processor configured to (or set to) perform A, B, and C" may mean a dedicated processor (e.g., an embedded processor) for performing a corresponding operation or a generic-purpose processor (e.g., a central processing unit (CPU) or an application processor) which performs corresponding operations by executing one or more software programs which are stored in a memory device.

When a component is referred to in the present disclosure as being "connected" to another component or "coupled" to another component, it should be understood that the component may be directly connected to or coupled to the other component, but unless there is a specific description to the contrary, it should also be understood that the component may be connected or coupled via another component therebetween.

In the present disclosure, a 'vehicle' is a means of transportation traveling on a road or a track. The concept of a vehicle may include an internal combustion engine vehicle equipped with an engine as a power source, a hybrid vehicle equipped with an engine and an electric motor as a power source, and an electric vehicle equipped with an electric motor as a power source. In an embodiment of the present disclosure, the vehicle may include at least one of an automobile, a train, and a motorcycle.

In the present disclosure, an 'occupant monitoring system (OMS)' represents a device that obtains an image by photographing at least one of a driver, a front passenger, and a rear passenger by using a camera and recognizes the face of an occupant from the image or recognizes an action of the occupant (e.g., drowsiness, sleep, conversation, and operation of a mobile device) by using an artificial intelligence model. The OMS may include a driver monitoring system (DMS). In an embodiment of the present disclosure, the OMS may include a camera that photographs an occupant, and may obtain a respiration signal from an image of a driver (or passenger) obtained through the camera.

In the present disclosure, 'abnormal respiration' refers to respiration in which breaths per minute, a respiration pattern, or a respiration waveform deviates from the range of normal respiration. For example, abnormal respiration may include hyperventilation, acute hyperventilation, hypopnea, transient apnea, and dyspnea.

In the present disclosure, a 'respiration guide user interface (UI)' is an interface that alleviates abnormal respiration and protects a driver by providing guide information for self-regulation of respiration of the driver (or passenger). In the present disclosure, the respiration guide UI may monitor a respiration condition, such as respiration patterns of inhalation and exhalation and the breaths per minute and include guide information that induces self-respiration by the driver. In an embodiment of the present disclosure, the respiration guide UI may be displayed on an instrument cluster in a vehicle. However, the respiration guide UI is not limited thereto and may be displayed via a head-up display (HUD) projected onto a wind shield of the vehicle.

Hereinafter, embodiments of the present disclosure are described in detail such that those of skill in the art may easily implement the same with reference to the accompanying drawings. However, the present disclosure may be implemented in various different forms and is not limited to the embodiments described herein.

Hereinafter, embodiments of the present disclosure will be described in detail with reference to the drawings.

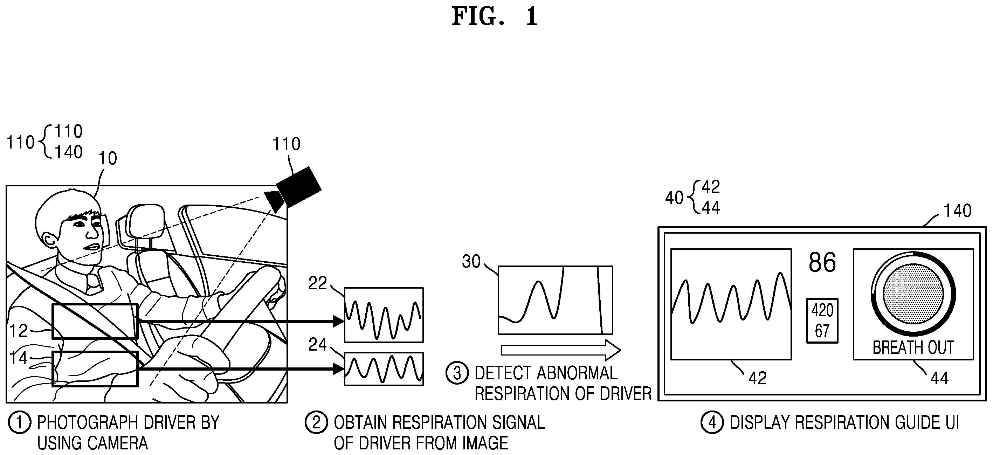

FIG. 1 is a diagram illustrating an operation in which an electronic device 100 detects respiration of a driver 10 and provides a respiration exercise guide user interface (UI) 40, according to an embodiment of the present disclosure.

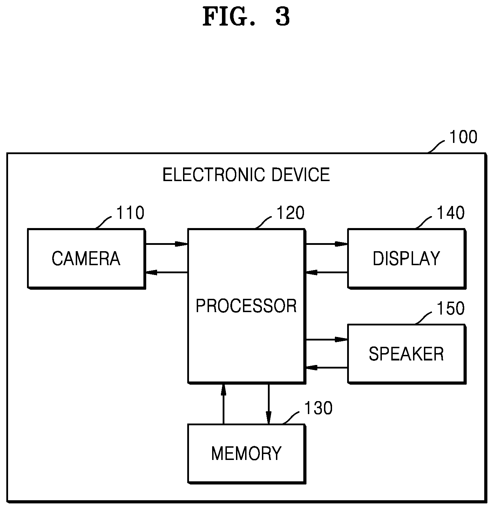

The electronic device 100 may be positioned inside the vehicle and may include a camera 110 and a display 140. Although not shown in FIG. 1, the electronic device 100 may include other components in addition to the camera 110 and the display 140. The components of the electronic device 100 will be described in detail with reference to FIG. 3.

The electronic device 100 may be implemented as an OMS that monitors occupants including the driver 10 inside the vehicle. In the present disclosure, an 'occupant monitoring system (OMS)' represents a device that obtains an image by photographing at least one of the driver 10, a front passenger, and a rear passenger by using the camera 110 and recognizes the face of an occupant from the image or recognizes an action of the occupant (e.g., drowsiness, sleep, conversation, and operation of a mobile device) by using an artificial intelligence model. The OMS may include a driver monitoring system (DMS). In an embodiment of the present disclosure, the OMS may obtain respiration signals 22 and 24 from an image of the driver 10 or a passenger obtained through the camera 110.

In all embodiments of the present disclosure, all functions and/or operations of the electronic device 100, such as "photographing the driver 10 to obtain a respiration signal" and "displaying a respiration guide UI 40 for protection of the driver 10," may be applied equally to at least one of occupants, including the driver 10, a passenger in a front seat, and a passenger in a rear seat even when the driver 10 is described.

Referring to FIG. 1, the camera 110 may be mounted inside the vehicle and may photograph an occupant inside the vehicle. In an embodiment of the present disclosure, the electronic device 100 may obtain an image including at least one of a chest 12 and an abdomen 14 among the body parts of the driver 10 by photographing the driver 10 by using the camera 110 (operation ①).

The electronic device 100 may obtain the respiration signals 22 and 24 of the driver 10 from the image (operation ②). In an embodiment of the present disclosure, the electronic device 100 may obtain the respiration signals 22 and 24 of the driver 10 by detecting movement of at least one body part from the chest 12 and the abdomen 14.

The electronic device 100 detects abnormal respiration of the driver 10 (operation ③). In an embodiment of the present disclosure, the respiration signals 22 and 24 of the driver 10 may be monitored in real time to detect abnormal respiration. In an embodiment of the present disclosure, the electronic device 100 may detect abnormal respiration through a respiration waveform graph 30, such as when a respiration intensity exceeds a threshold or breaths per minute increases rapidly. Abnormal respiration may include, for example, at least one of hyperventilation, acute hyperventilation, hypopnea, transient apnea, and dyspnea.

The electronic device 100 may display a respiration guide user interface (UI) 40 when abnormal respiration is detected (operation ④). In the present disclosure, the respiration guide UI 40 is an interface that alleviates abnormal respiration and protects the driver 10 or a passenger by providing guide information for self-regulation of respiration of the driver 10 or a passenger. In the embodiment illustrated in FIG. 1, the respiration guide UI 40 may include a respiration waveform graph 42 indicating respiration patterns of inhalation and exhalation, breaths per minute, and the like, and a respiration exercise guide 44 that induces self-respiration of the driver 10.

The respiration guide UI 40 may be displayed through the display 140. The display 140 may be an instrument cluster display, but is not limited thereto. In an embodiment of the present disclosure, the display 140 may include at least one of a center information display (CID), a navigation device, a head up display (HUD), or a passenger seat display.

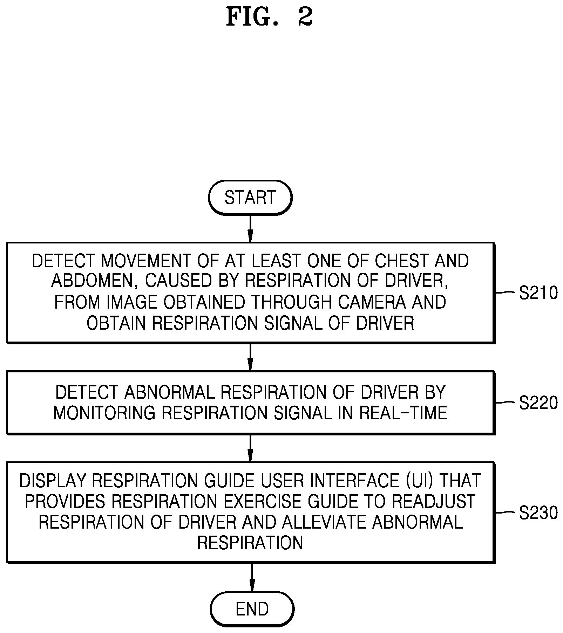

Hereinafter, with reference to FIG. 1 and FIG. 2, a function and/or an operation in which the electronic device 100 detects the respiration of the driver 10 of the vehicle and displays the respiration guide UI 40 for protection of the driver 10 will be described in detail.

FIG. 2 is a flowchart illustrating a method by which the electronic device 100 detects respiration of a driver and provides a respiration guide user interface (UI), according to an embodiment of the present disclosure.

In operation S210, the electronic device 100 detects movement of at least one of the chest and abdomen, caused by respiration of a driver, from an image obtained through a camera and obtains a respiration signal of the driver. Referring also to operation ① of FIG. 1, the electronic device 100 may obtain an image including at least one of the chest 12 and the abdomen 14 from the body parts of the driver 10 (see FIG. 1) by photographing the driver 10 by using the camera 110 (see FIG. 1). The electronic device 100 may obtain the respiration signals 22 and 24 of the driver 10 from the obtained image. Referring also to operation ② of FIG. 1, the electronic device 100 may detect at least one of the chest 12 and the abdomen 14 of the driver 10 from an image, recognize and track fine motion during respiration changes of inhalation and exhalation of at least one of the recognized chest 12 and abdomen 14, and thereby obtain the respiration signals 22 and 24.

In an embodiment of the present disclosure, the electronic device 100 may obtain the respiration signals 22 and 24 of the driver 10 by using a light reflectance analysis technology that analyzes changes in brightness of body parts (e.g., the chest 12 and the abdomen 14) from an image to track fine movements of body parts caused by respiration. In an embodiment of the present disclosure, the electronic device 100 may obtain the respiration signals 22 and 24 of the driver 10 by using an optical flow analysis technology that analyzes changes in pixel values of an image and tracks the fine movements of body parts (e.g., the chest 12 and the abdomen 14) that change during respiration. However, the electronic device 100 is not limited thereto, and the electronic device 100 may estimate a heart rate of the driver 10 by analyzing a skin absorption color amount from an image obtained through an RGB camera and may also obtain the respiration signals 22 and 24 through a skin light absorption analysis technology (remote photoplethysmography (rPPG)) that measures respiration. In an embodiment of the present disclosure, the electronic device 100 may further include a thermal imaging camera or a radar sensor and may obtain the respiration signals 22 and 24 of the driver 10 by using either the thermal imaging camera or the radar sensor.

In operation S220, the electronic device 100 detects abnormal respiration of the driver by monitoring the respiration signal in real time. In an embodiment of the present disclosure, the electronic device 100 may obtain a respiration signal in real time and detect abnormal respiration including at least one of hyperventilation, acute hyperventilation, hypopnea, transient apnea, and dyspnea by monitoring the obtained respiration signal. Referring to operation ③ of FIG. 1, the electronic device 100 may detect abnormal respiration through the respiration waveform graph 30 (see FIG. 1), such as when a respiration intensity exceeds a threshold or breaths per minute increases rapidly.

In an embodiment of the present disclosure, the electronic device 100 may obtain a respiration signal regarding rest respiration of the driver when the vehicle is stopped or drives at a low speed below a threshold speed and may detect abnormal respiration by comparing the respiration signal of the driver, which is monitored in real time, with the rest respiration. For example, the electronic device 100 may determine that abnormal respiration has been detected when a difference between the respiration signal of rest respiration and the respiration signal of the driver monitored in real time exceeds a preset threshold.

In operation S230, the electronic device 100 displays a respiration guide user interface (UI) that provides a respiration exercise guide to readjust the respiration of the driver and alleviate abnormal respiration. In the present disclosure, the 'respiration guide UI' is guide information that enables a driver or a passenger to regulate respiration through self-respiration and is an interface that alleviates abnormal respiration and protects the driver or the passenger. Referring also to operation ④ of FIG. 1, the respiration guide UI 40 (see FIG. 1) may include a respiration waveform graph 42 (see FIG. 1) indicating respiration patterns of inhalation and exhalation and breaths per minute and a respiration exercise guide 44 (see FIG. 1) that induces self-respiration of the driver 10. In an embodiment of the present disclosure, the electronic device 100 may display the respiration guide UI 40 that includes both respiration waveforms of a thoracic respiration signal obtained from chest movement of the driver 10 and an abdominal respiration signal obtained from abdominal movement of the driver. In this case, the respiration guide UI 40 may include information regarding the real-time change amount of each of the thoracic respiration signal and the abdominal respiration signal.

In an embodiment of the present disclosure, the electronic device 100 may display the respiration guide UI 40 on an instrument cluster display of a vehicle. However, the electronic device 100 is not limited thereto and may display the respiration guide UI 40 via a head-up display (HUD) projected onto a wind shield of the vehicle.

In an embodiment of the present disclosure, the electronic device 100 may determine a time point for displaying the respiration guide UI 40 based on at least one of whether the vehicle drives autonomously and a situation in which the driver 10 intervenes in driving of the vehicle. The electronic device 100 may recognize an autonomous driving level of the vehicle and determine whether to display the respiration guide UI 40 by determining a correlation between respiration of the driver 10 and vehicle driving control. For example, in a driving situation in which the driver 10 needs to intervene in driving of the vehicle or an autonomous driving level (e.g., level 0, level 1, and level 2), the electronic device 100 may display the respiration guide UI 40 only when the vehicle is stopped or in a low-speed driving section. For example, in a fully autonomous driving mode (e.g., autonomous driving level 3 or higher), the electronic device 100 may display the respiration guide UI 40 regardless of a speed of a vehicle.

FIGS. 1 and FIGS. 2 are illustrated and described as providing visual information by displaying a respiration guide UI 40, but the present disclosure is not limited thereto. In an embodiment of the present disclosure, the electronic device 100 may further include a speaker that outputs a sound signal and may output a voice message that guides respiration exercise through the speaker. The voice message may include, for example, "Take deep, slow breaths," "Breath in," "Breath out," and "Great Job,". In an embodiment of the present disclosure, the electronic device 100 may output a warning sound through a speaker when abnormal respiration of the driver 10 is detected.

In an embodiment of the present disclosure, when detecting abnormal respiration of the driver 10, the electronic device 100 may generate a vibration effect on the steering wheel by controlling a steering wheel through an electronic control unit (ECU).

Recently, legislation has been enacted worldwide to mandate the installation of OMSs in vehicles for the purpose of protection of the driver 10 and the prevention of road traffic accidents. In particular, the European Union has considered actively utilizing an OMS according to the goal of reducing the number of traffic accident fatalities by half. Similar laws are expected to be implemented in countries such as the United States, China, and Australia, and Korea has also considered legislation to mandate the installation of OMSs in vehicles.

Automakers have attempted to equip their vehicles with driver state understanding technologies to not only detect drowsy or inattentive driving, but also to advance autonomous driving and safety technologies. As part of driver state understanding technology, a technology is required to monitor respiration of the driver 10 or passenger by using an OMS, to protect the driver (or passenger) from abnormal respiration that is outside the range of normal respiration, such as hyperventilation, hypopnea, transient apnea, and dyspnea, and to prevent traffic accidents in advance.

An object of the present disclosure is to provide an electronic device and an operating method thereof, which protects the driver 10 and prevent traffic accidents in advance by obtaining a respiration signal of the driver 10 or a passenger from an image obtained by photographing the driver 10 or the passenger through an occupant monitoring system (OMS) including the camera 110 and the display 140 and providing respiration exercise guide information for self-respiration of the driver 10 when abnormal respiration outside the range of normal respiration is detected.

The electronic device 100 according to the embodiment illustrated in FIGS. 1 and 2 may obtain an image by photographing the driver 10 through the camera 110, obtain a respiration signal of the driver 10 by analyzing movement of at least one of the chest 12 and the abdomen 14 of the driver 10 from the image, and monitor the respiration signal in real time and display the respiration guide UI 40 when abnormal respiration is detected, thereby helping with self-respiration of the driver 10 and alleviating abnormal respiration. As such, the electronic device 100 according to an embodiment of the present disclosure provides a technical effect of preventing in advance traffic accidents caused by respiratory instability conditions such as hyperventilation, acute hyperventilation, hypopnea, transient apnea, and dyspnea and protecting the driver 10. The electronic device 100 according to an embodiment of the present disclosure provides a technical effect of regulating the balance between thoracic respiration and abdominal respiration by providing a respiration exercise guide UI for thoracic respiration by the chest 12 as well as abdominal respiration by the abdomen 14, thereby providing stress relief and reduction of high blood pressure of the driver 10.

FIG. 3 is a block diagram illustrating components of the electronic device 100 according to an embodiment of the present disclosure.

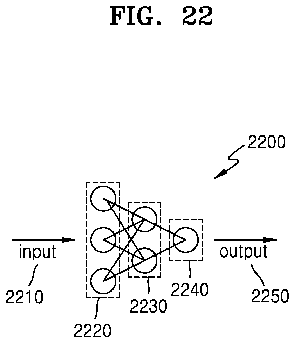

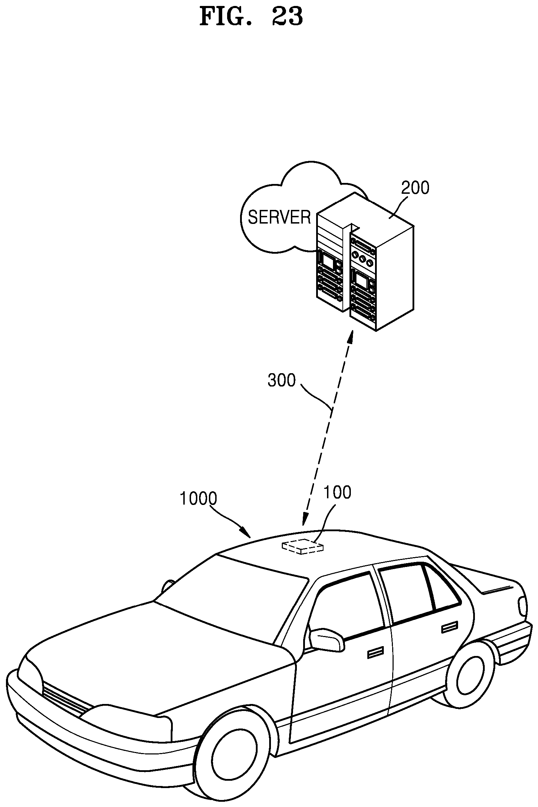

The electronic device 100 may be implemented as an occupant monitoring system (OMS). Referring to FIG. 3, the electronic device 100 may include the camera 110, a processor 120, memory 130, the display 140, and a speaker 150. The camera 110, the processor 120, the memory 130, the display 140, and the speaker 150 may be electrically and/or physically connected to each other. In FIG. 3, only required components for explaining the operation of the electronic device 100 are shown, and the components included in the electronic device 100 are not limited to those shown in FIG. 3. In an embodiment of the present disclosure, the electronic device 100 may further include a communication interface 160 (see FIG. 23) configured to perform data transmission and reception with a server 200 (see FIG. 22 and FIG. 23) or an external device.

In an embodiment of the present disclosure, the electronic device 100 may not include some of the components shown in FIG. 3. For example, the electronic device 100 may not include the speaker 150.

The camera 110 is configured to obtain images by photographing an occupant, such as a driver and/or a passenger, who are inside the vehicle. The camera 110 may include one or more cameras. The camera 110 may include a lens module, an image sensor, and an image processing module. The camera 110 may obtain a still image or video of an object (e.g., driver) by using an image sensor (e.g., CMOS or CCD). The video may include a plurality of image frames that are continuously obtained by photographing an object through a camera. The image processing module may encode a still image including a single image frame obtained through an image sensor or video data including a plurality of image frames and transmit the still image or the video data to the processor 120.

In an embodiment of the present disclosure, the camera 110 may be implemented as an RGB camera. However, the camera 110 is not limited thereto and may be implemented as an infrared (IR) camera including an infrared light source and an image sensor. In this case, the infrared lighting irradiates light in the infrared band toward the driver (or passenger) inside the vehicle and may consist of, for example, a laser light source, a light-emitting diode (LED) light source, or vertical-cavity surface-emission lasers (VCSELs). The image sensor may obtain an image by receiving light reflected from an infrared light source and converting the light into a digital signal. In an embodiment of the present disclosure, the image sensor may obtain a driver image by collecting reflected light reflected from an occupant through a lens, receiving the reflected light through a light receiving sensor, and converting an analog light signal into a digital signal through an analog-to-digital converter. The image sensor may include, for example, any one of complementary metal oxide semiconductor (CMOS), charge coupled device (CCD), or charge priming device (CPD).

In an embodiment of the present disclosure, the camera 110 may include a combination of an RGB camera and an IR camera and obtain an image by photographing at least one of the chest and the abdomen of the driver.

The processor 120 may execute one or more instructions of a program stored in the memory 130. The processor 120 may include hardware components that perform arithmetic, logic and input/output operations and image processing. In FIG. 3, the processor 120 is shown as a single element, but is not limited thereto. In an embodiment of the present disclosure, the processor 120 may include one or more elements. One or more processors included in the processor 120 may be circuitry such as a system on chip (SoC) and an integrated circuit (IC). For example, the processor 120 may be a general-purpose processor such as a central processing unit (CPU), an application processor (AP), a digital signal processor (DSP), a graphics-only processor such as a graphic processing unit (GPU) or a vision processing unit (VPU), or an artificial intelligence-only processor such as a neural processing unit (NPU). When the processor 120 is an artificial intelligence-dedicated processor, the artificial intelligence-dedicated processor may be designed with a hardware structure specialized for processing a specific artificial intelligence model.

The processor 120 may include various processing circuits and/or a plurality of processors. For example, the term 'processor' as used in the present disclosure, including in the claims, may include various processing circuits including at least one processor. At least one processor in at least one processor may be configured to perform the various functions described in the present disclosure individually and/or collectively in a distributed manner. As used here, 'processor', 'at least one processor', and 'one or more processors' may be configured to perform various functions. However, these terms cover, without limitation, situations in which one processor performs some of the functions and other processor(s) perform other parts of the functions, and situations in which a single processor may perform all functions. At least one processor may include a combination of processors that perform various functions of the functions described in a distributed manner. At least one processor may execute program instructions to obtain or perform various functions.

The memory 130 may include, for example, at least one type of storage medium among a flash memory type, a hard disk type, a multimedia card micro type, a card type memory (e.g., SD or XD memory), random access memory (RAM), static random access memory (SRAM), read-only memory (ROM), electrically erasable programmable read-only memory (EEPROM), programmable read-only memory (PROM), or an optical disk.

The memory 130 may store instructions related to functions and/or operations in which the electronic device 100 obtains a respiration signal of a vehicle driver, monitors the respiration signal to detect abnormal respiration, and displays a respiration guide UI when abnormal respiration is detected. In an embodiment of the present disclosure, at least one of instructions, an algorithm, a data structure, a program code, and an application program that may be read by the processor 120 may be stored in the memory 130. Instructions, algorithms, data structures, and program code stored in the memory 130 may be implemented in a programming or scripting language such as, for example, C, C++, Java, and assembler.

The processor 120 may perform functions and/or operations of obtaining a respiration signal of a vehicle driver, monitoring the respiration signal to detect abnormal respiration, and displaying a respiration guide UI when abnormal respiration is detected, by executing instructions or program code stored in the memory 130. Hereinafter, functions and/or operations performed by the processor 120 by executing instructions or program codes stored in the memory 130 will be described.

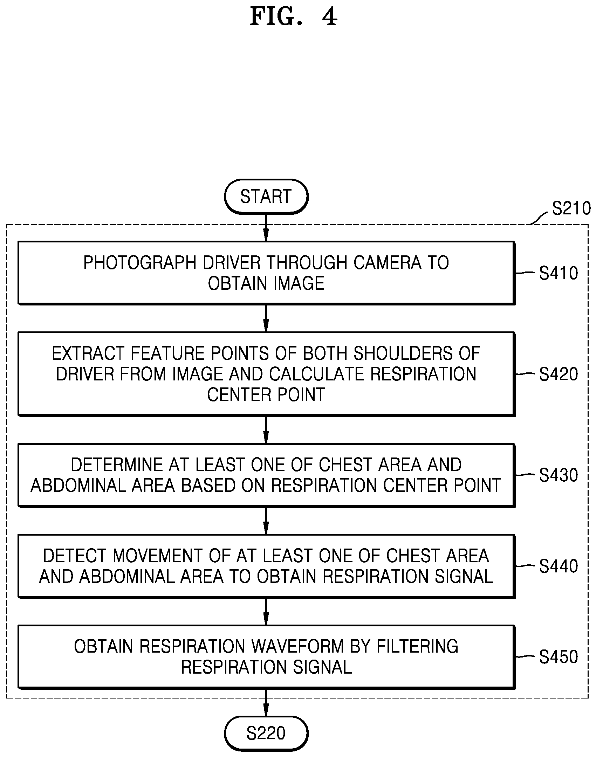

The processor 120 may obtain an image by photographing the driver through the camera 110 and obtain the respiration signal of the driver from the obtained image. In an embodiment of the present disclosure, the processor 120 may recognize a respiration detection area including at least one of the chest and the abdomen among the body parts of the driver from an image obtained through the camera 110. For example, the processor 120 may extract feature points of both shoulders of the driver from an image and recognize at least one respiration detection area among a chest area and an abdominal area of the driver based on the extracted feature points of both shoulders. For example, the processor 120 may extract feature points of both shoulders and feature points of both pelvis of the driver from an image, and based on the extracted feature points of both shoulders and feature points of both pelvis of the driver, recognize at least one respiration detection area among the chest area and the abdominal area of the driver. When the driver wears a seat belt and covers the respiration detection area, the processor 120 may identify a seat belt area from the image and recognize a valid area for detecting respiration by removing the seat belt area. Detailed embodiments in which the processor 120 recognizes a respiration detection area will be described in detail with reference to FIGS. 4 to 9.

The processor 120 may obtain a respiration signal of a driver by detecting fine movement of a respiration detection area including at least one of the chest and the abdomen of the driver. In an embodiment of the present disclosure, the processor 120 may obtain the respiration signal of the driver by using a light reflectance analysis technology that irradiates a light source (e.g., an infrared light source) coupled to the camera 110 onto a body part of the driver (e.g., chest and abdomen) and analyzes a change in light reflection of the infrared light source reflected from the body part to determine the respiration pattern of inhalation and exhalation and the number of breaths of the driver. The light reflectance analysis technology is a method that identifies a body part from an image and track fine movement of the body part caused by respiration by analyzing a change in brightness of the body part. In an embodiment of the present disclosure, the processor 120 may obtain the respiration signal of the driver by using an optical flow analysis technology that analyzes a change in pixel values of an image obtained through the camera 110 and tracks fine movement of the body part (e.g., chest and abdomen) that changes during respiration.

However, the method by which the processor 120 obtains a respiration signal of a driver from the image is not limited to the method described above. In an embodiment of the present disclosure, the processor 120 may estimate a heart rate of the driver by analyzing a skin absorption color amount from an image obtained through an RGB camera and may also obtain the respiration signal of the driver through a skin light absorption analysis technology (remote photoplethysmography (rPPG)) that measures respiration. In an embodiment of the present disclosure, the camera 110 may include at least one of a thermal imaging camera or a radar sensor as a component, and the processor 120 may further include a thermal imaging camera or a radar sensor and may also obtain a respiration signal of the driver by using either the thermal imaging camera or the radar sensor.

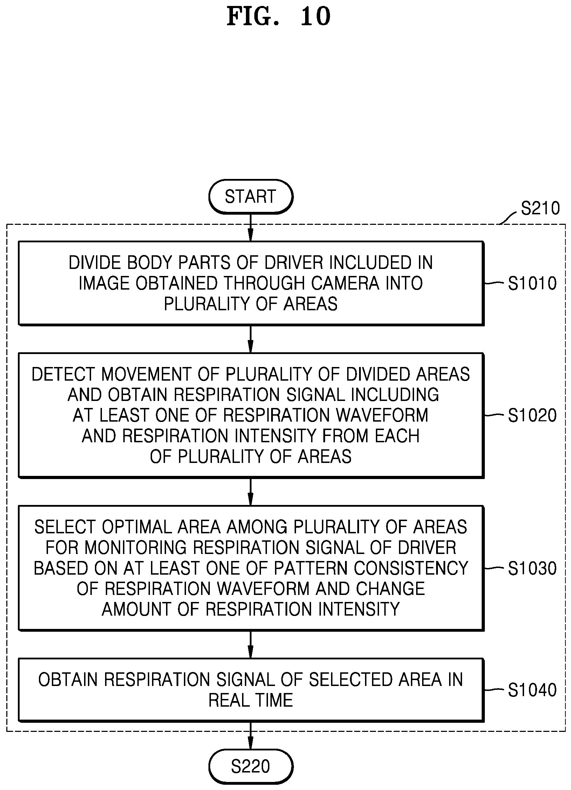

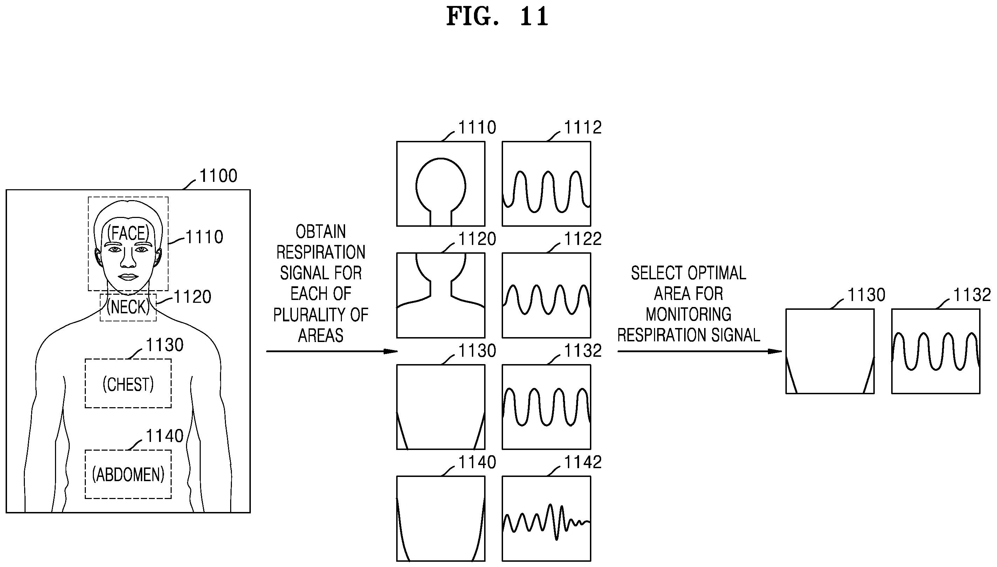

In an embodiment of the present disclosure, the processor 120 may recognize a body part of the driver from an image obtained through the camera 110 and divide the recognized body part into a plurality of areas. For example, the processor 120 may recognize body parts such as the face, the neck, the chest, and the abdomen of the driver from an image, and divide the recognized body parts into the face, the neck, the chest, and the abdomen, respectively. The processor 120 may obtain a respiration signal including at least one of a respiration waveform and a respiration intensity from each of the plurality of areas by detecting the movement of a plurality of divided areas. The processor 120 may select an optimal area among a plurality of areas for monitoring the respiration signal of the driver based on at least one of the pattern consistency of the respiration waveform and the change amount in respiration intensity, and may obtain the respiration signal of the selected area in real time. A detailed embodiment in which the processor 120 divides the body parts of the driver from an image into a plurality of areas and selects an optimal area among the plurality of divided areas for monitoring a respiration signal will be described in detail with reference to FIG. 10 and FIG. 11.

However, the processor 120 is not limited thereto, and in an embodiment of the present disclosure, the processor 120 may merge respiration signals respectively obtained from the plurality of areas and monitor the merged respiration signals in real time.

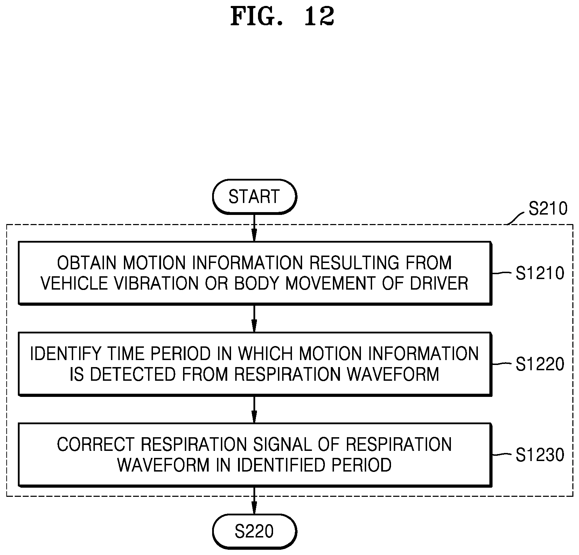

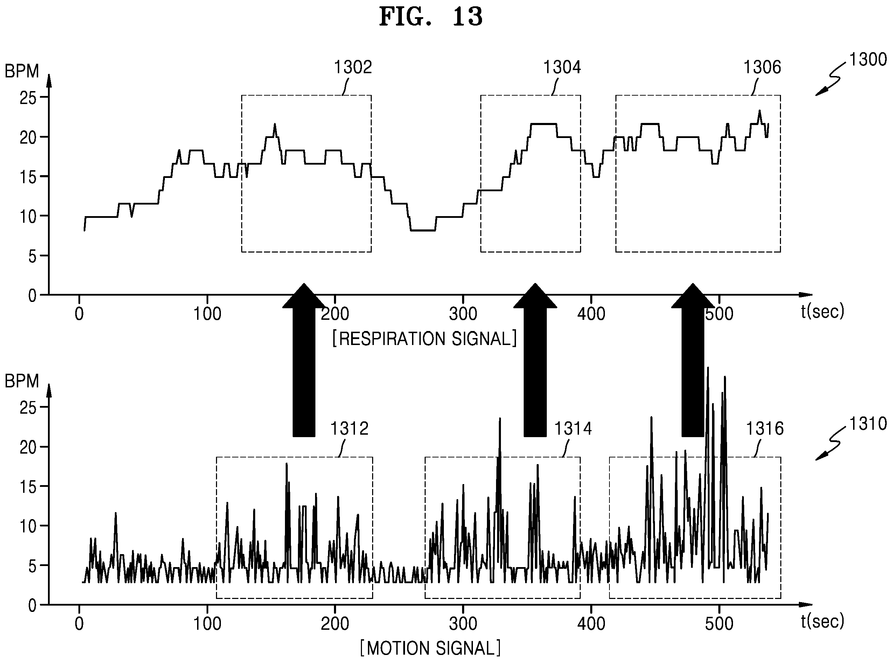

When obtaining the respiration signal of the driver, if vehicle vibration occurs or the driver moves their body, the accuracy of the respiration signal may be reduced due to motion artifacts caused by vibration and body movement. In an embodiment of the present disclosure, the processor 120 may obtain motion information resulting from vehicle vibration or body movement of the driver, identify a time period in which motion information is detected from the respiration waveform according to a flow of time of the respiration signal, and correct the respiration signal in the identified time period. A detailed embodiment in which the processor 120 obtains motion information resulting from vehicle vibration and body movement of the driver and corrects a respiration signal based on the motion information will be described in detail with reference to FIG. 12 and FIG. 13.

The processor 120 may detect abnormal respiration including at least one of hyperventilation, hypopnea, transient apnea, and dyspnea by monitoring the obtained respiration signal in real time. In an embodiment of the present disclosure, the processor 120 detect a situation in which abnormal respiration occurs, such as when the respiration intensity exceeds a threshold or when breaths per minute increase rapidly, by monitoring the respiration signal in real time.

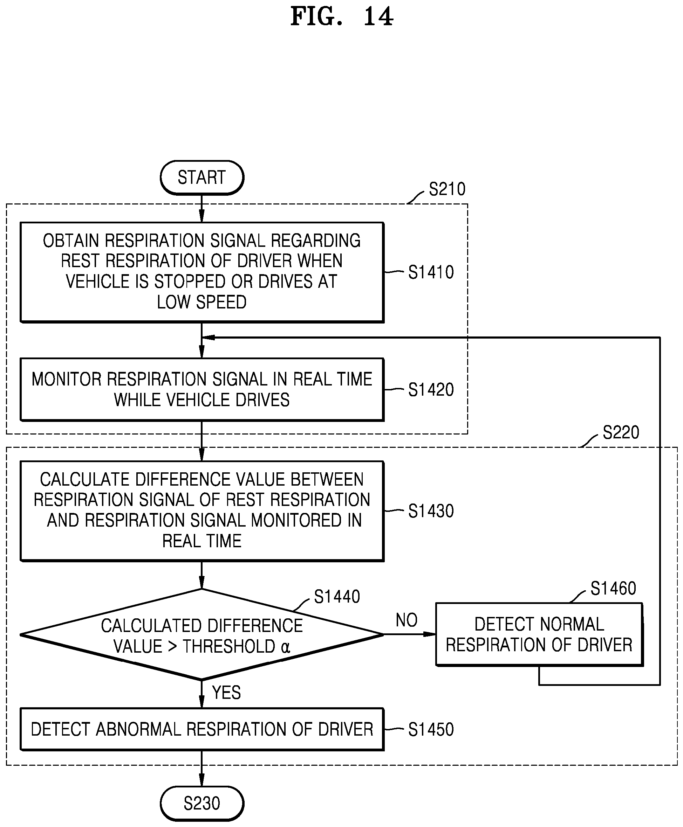

In an embodiment of the present disclosure, the processor 120 may obtain a respiration signal regarding rest respiration of the driver when the vehicle is stopped or drives at a low speed below a threshold speed and may detect abnormal respiration by comparing the respiration signal of the driver, which is monitored in real time, with the rest respiration. A detailed embodiment in which the processor 120 detects abnormal respiration by comparing a respiration signal of rest respiration with a respiration signal obtained in real time will be described in detail with reference to FIG. 14.

The processor 120 may display on the display 140 a respiration guide user interface (UI) that provides a respiration exercise guide as abnormal respiration is detected. In the present disclosure, the 'respiration guide UI' is guide information that enables a driver or a passenger to regulate respiration through self-respiration and is an interface that alleviates abnormal respiration and protects the driver or the passenger. In an embodiment of the present disclosure, the processor 120 may display a respiration guide UI through the display 140 that includes a respiration waveform graph showing the respiration pattern of inhalation/exhalation, the number of breaths per minute, and the like, and a respiration exercise guide graphic that induces self-respiration of the driver.

In an embodiment of the present disclosure, the processor 120 may display through the display 140 the respiration guide UI that includes both respiration waveforms of a thoracic respiration signal obtained from chest movement of the driver and an abdominal respiration signal obtained from abdominal movement of the driver. In this case, the respiration guide UI may include information regarding the real-time change amount of each of the thoracic respiration signal and the abdominal respiration signal.

In an embodiment of the present disclosure, the processor 120 may recognize at least one of whether the vehicle drives autonomously and a situation in which the driver intervenes in driving of the vehicle and determine a time point for displaying the respiration guide UI based on the recognition result. The processor 120 may recognize an autonomous driving level of the vehicle and determine whether to display the respiration guide UI by determining a correlation between respiration of the driver and vehicle driving control. For example, in a driving situation in which the driver needs to intervene in driving of the vehicle or an autonomous driving level (e.g., level 0, level 1, and level 2), the processor 120 may display the respiration guide UI only when the vehicle is stopped or in a low-speed driving section. For example, in a fully autonomous driving mode (e.g., autonomous driving level 3 or higher), the processor 120 may display the respiration guide UI regardless of a speed of a vehicle.

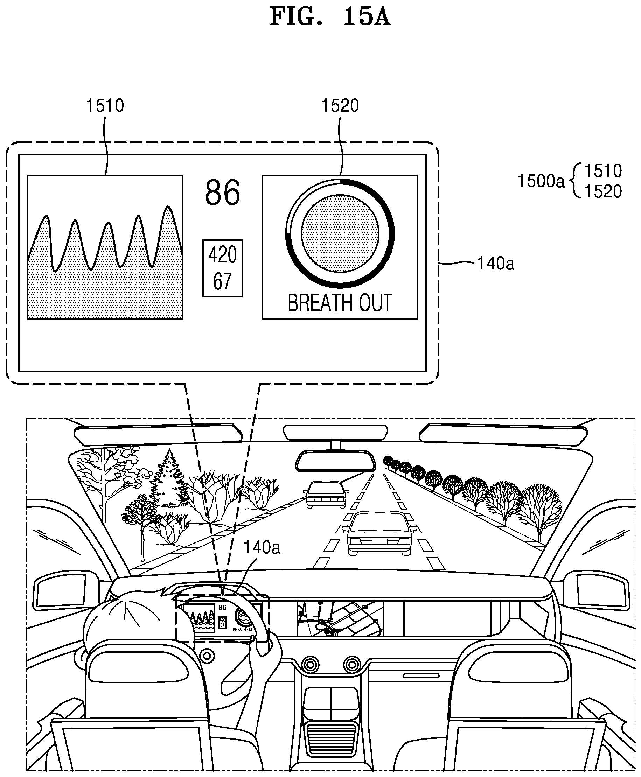

Detailed examples of the respiration guide UI displayed through the display 140 will be described in detail with reference to FIGS. 15A, 15B, 16, 17, and 18.

In an embodiment of the present disclosure, when the processor 120 recognizes that the current stage is a driving stage requiring driver intervention, the processor 120 may generate a simplified respiration guide UI not to interfere with driving the vehicle, and display the simplified respiration guide UI through the display 140. In a situation in which the vehicle drives in fully autonomous driving mode, the processor 120 may control the display 140 to display a respiration guide UI in a full display state.

In an embodiment of the present disclosure, the processor 120 may determine whether to execute the respiration guide UI according to the characteristics of a driving route in conjunction with a navigation device of the vehicle. For example, the processor 120 may receive information regarding the driving route from the navigation device, identify a complex driving route requiring concentration on driving, a point with a high incidence of vehicle accidents, or a point requiring attention, and display a respiration guide UI when the vehicle deviates from the identified route or point.

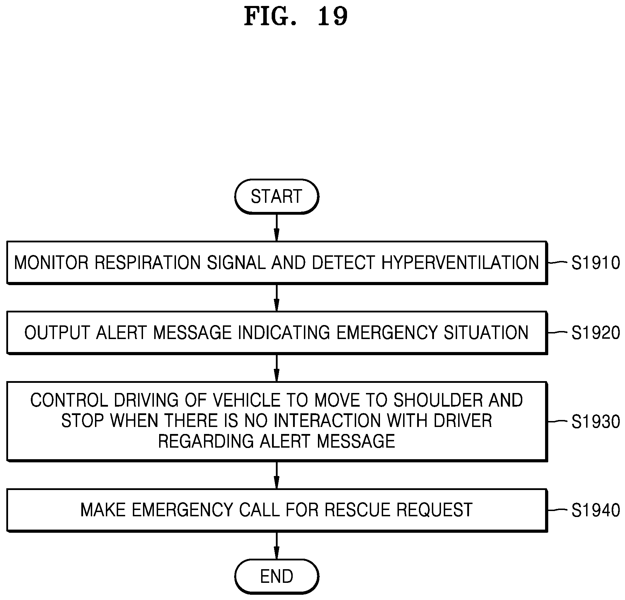

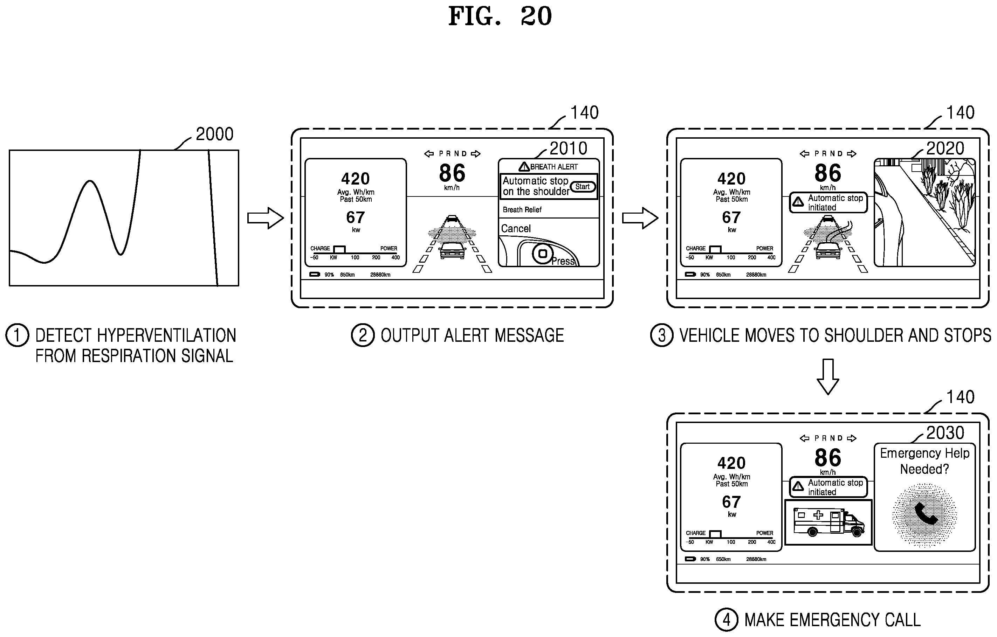

In an embodiment of the present disclosure, the processor 120 may output an alert message indicating an emergency situation when hyperventilation of abnormal respiration is detected, and control driving of the vehicle to move to the shoulder and stop when there is no interaction with the driver regarding the output alert message. The processor 120 may make an emergency call for a rescue request. A detailed embodiment in which the processor 120 stops the vehicle on the shoulder and makes an emergency call when hyperventilation is detected will be described in detail with reference to FIG. 19 and FIG. 20.

The display 140 is configured to display a respiration guide UI under control of the processor 120. In an embodiment of the present disclosure, the display 140 may be implemented as an instrument cluster display. However, the display 140 is not limited thereto and may include at least one of, for example, a center information display (CID), a head up display (HUD), a navigation device, or a passenger seat display.

The display 140 may include a screen including at least one of, for example, a liquid crystal display, a thin film transistor-liquid crystal display, an organic light-emitting diode display, a flexible display, a 3D display, or an electrophoretic display.

The speaker 150 is a device configured to output a sound signal. The speaker 150 may output a voice message guiding respiration exercise under control of the processor 120. The voice message may include, for example, "Take deep, slow breaths," "Breath in," "Breath out," and "Great Job,". In an embodiment of the present disclosure, the speaker 150 may output a warning sound under control of the processor 120 when abnormal respiration of the driver is detected.

In an embodiment of the present disclosure, the speaker 150 may output a sound effect that guides respiration exercises. For example, the speaker 150 may output a sound effect such as a countdown sound effect to start respiration exercise, an inhalation/exhalation respiration exercise sound effect, or a natural sound background sound.

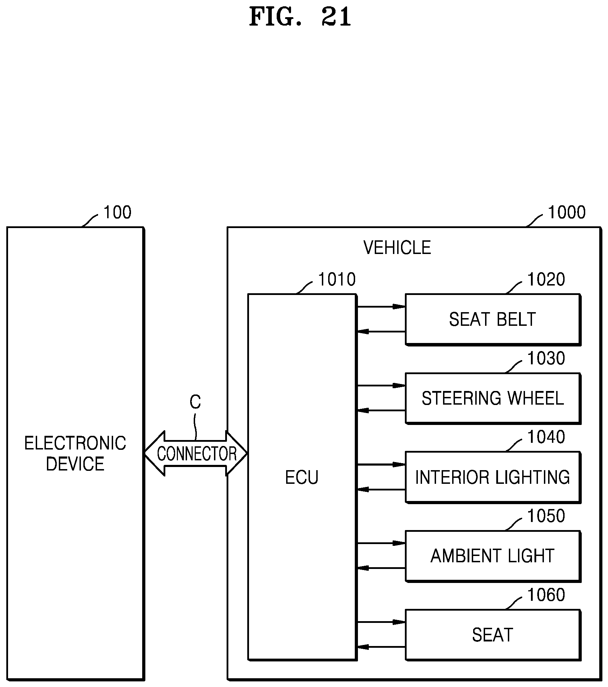

Although not shown in FIG. 3, the electronic device 100 may control various devices of the vehicle (e.g., seat belt, steering wheel, ambient light, and seat) through an electronic control unit (ECU). In an embodiment of the present disclosure, the processor 120 of the electronic device 100 may perform a function and/or an operation of controlling various devices of the vehicle through the ECU when abnormal respiration is detected to alleviate abnormal respiration of the driver and protect the driver by lowering stress and blood pressure. A detailed embodiment in which the electronic device 100 controls devices of the vehicle through the ECU when abnormal respiration of the driver is detected will be described in detail with reference to FIG. 21.

FIG. 4 is a flowchart illustrating a method by which the electronic device 100 obtains a respiration signal of a driver, according to an embodiment of the present disclosure.

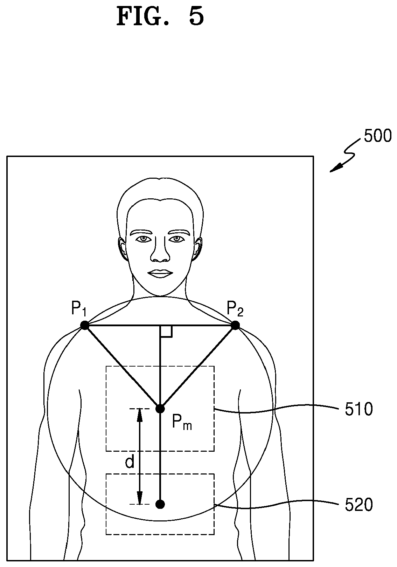

FIG. 5 is a diagram illustrating an operation in which the electronic device 100 obtains a respiration signal from at least one area of a chest 510 and an abdomen 520 that are identified based on feature points of both shoulders P₁ and P₂ of the driver, according to an embodiment of the present disclosure.

Hereinafter, with reference to FIG. 4 and FIG. 5, a function and/or an operation in which the electronic device 100 identifies at least one area of the chest 510 and the abdomen 520 and obtains a respiration signal from the identified area will be described in detail.

Operations S410 to S450 illustrated in FIG. 4 are obtained by embodying operation S210 of FIG. 2. Referring to FIG. 4, in operation S410, the electronic device 100 obtain an image by photographing the driver through a camera. Referring also to FIG. 5, the electronic device 100 may obtain an image 500 by photographing the upper body, including the face, neck, chest, and abdomen of the driver using a camera.

In operation S420 of FIG. 4, the electronic device 100 extracts feature points of both shoulders of the driver from the image and calculates a respiration center point. In an embodiment of the present disclosure, the electronic device 100 may recognize key feature points of body parts from an image of a driver by performing vision recognition using an artificial intelligence model. In the present disclosure, "vision recognition" refers to image signal processing in which an image is input into an artificial intelligence model to recognize (detect) an object from the input image, classify an object into a certain category, or segment an object through inference using the artificial intelligence model. In an embodiment of the present disclosure, the 'artificial intelligence model' may be implemented as a deep neural network model trained to recognize an object (e.g., face, neck, chest, and abdomen) from input image data and to recognize feature points of the objects (e.g., face feature point, neck feature point, shoulder feature point, and pelvic feature point). In the present disclosure, the 'deep neural network model' may be an end-to-end model trained using a supervised learning method that applies tens of thousands or hundreds of millions of multiple images as input data and applies feature points of body parts included in the input data as ground truths. The deep neural network model may be implemented, for example, as a convolutional neural network (CNN), but is not limited thereto. The deep neural network model may be implemented, for example, as recurrent neural network (RNN), restricted Boltzmann machine (RBM), deep belief network (DBN), bidirectional recurrent deep neural network (BRDNN), or deep Q-network.

However, the present disclosure is not limited thereto, and in an embodiment of the present disclosure, the processor 120 may extract a body feature point of the driver from an image by using known image processing technology.

In the embodiment illustrated in FIG. 5, the processor 120 (see FIG. 3) of the electronic device 100 may perform vision recognition by inputting the image 500 to an artificial intelligence model and extract a right shoulder feature point P₁ and left shoulder feature point P₂ from the image 500. The processor 120 may calculate a median point centered on the extracted right shoulder feature point P₁ and the left shoulder feature point P₂ and identify the location of a respiration center point Pₘ through this. In an embodiment of the present disclosure, the processor 120 may calculate the median point of the feature points of both shoulders P₁ and P₂ through a circle center point extraction calculation method using two points and a ring and obtain location information of the respiration center point Pₘ by moving the center axis around the calculated midpoint.

Referring back to FIG. 4, in operation S430, the electronic device 100 determines at least one of a chest area and an abdominal area based on the respiration center point. Referring also to FIG. 5, the processor 120 of the electronic device 100 may determine an area of a certain size centered on the respiration center point Pₘ as an area of the chest 510. In an embodiment of the present disclosure, the processor 120 may determine an area of a certain size as an area of the abdomen 520 centered on a point spaced apart by a preset distance d from the respiration center point Pₘ.

In the embodiment illustrated in FIG. 5, the electronic device 100 is shown to determine both the chest 510 and the abdomen 520 from the image 500, but the embodiments of the present disclosure are not limited to those illustrated. In an embodiment of the present disclosure, the processor 120 of the electronic device 100 may determine only an area of the chest 510 or only an area of the abdomen 520.

Referring back to FIG. 4, in operation S440, the electronic device 100 detects movement of at least one of the chest area and abdominal area to obtain a respiration signal. In an embodiment of the present disclosure, the processor 120 of the electronic device 100 may obtain a respiration signal by recognizing and tracking at least one fine movement of the areas of the chest 510 and the abdomen 520 by using any one of the light reflectance analysis technology, the optical flow analysis technology, or the skin light absorption analysis technology. A method of obtaining a respiration signal by using the light reflectance analysis, optical flow analysis, skin light absorption analysis technologies, or the like is the same as that described with reference to FIGS. 2 and FIGS. 3, and thus a redundant description is omitted. However, the method of obtaining the respiration signal is not limited to the technologies described above, and the electronic device 100 according to the present disclosure may obtain the respiration signal by recognizing and tracking the fine movement of at least one area of the chest 510 and the abdomen 520 by using all known technologies.

In operation S450 of FIG. 4, the electronic device 100 obtain a respiration waveform by filtering the respiration signal. The respiration waveform may include information regarding the respiration pattern of inhalation/exhalation, respiration volume, breaths per minute, and the like based on the respiration signal obtained over time.

After operation S450 is performed, operation S220 shown in FIG. 2 may be performed.

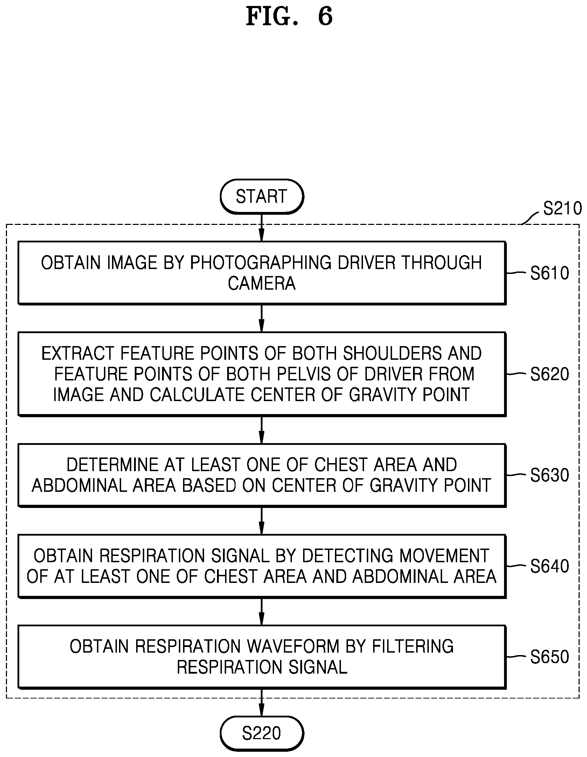

FIG. 6 is a flowchart illustrating a method by which the electronic device 100 obtains a respiration signal of a driver, according to an embodiment of the present disclosure.

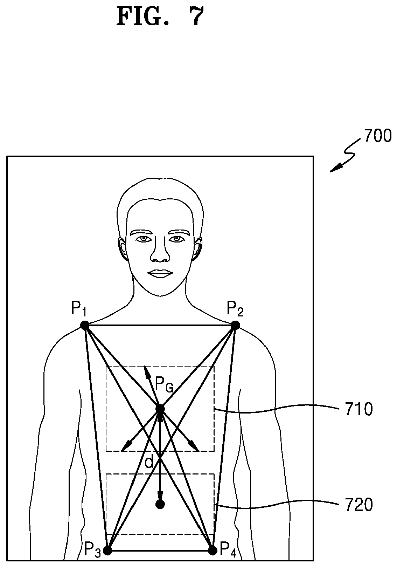

FIG. 7 is a diagram illustrating an operation in which the electronic device 100 obtains a respiration signal from at least one area of a chest 710 and an abdomen 720 that are identified based on the feature points of both shoulders P₁ and P₂ and the feature points of both pelvis P₃ and P₄ of the driver, according to an embodiment of the present disclosure.

Hereinafter, with reference to FIG. 6 and FIG. 7, a function and/or an operation in which the electronic device 100 identifies at least one area of the chest 710 and the abdomen 720 and obtains a respiration signal from the identified area will be described in detail.

Operations S610 to S650 illustrated in FIG. 6 are obtained by embodying operation S210 of FIG. 2. Referring to FIG. 6, in operation S610, the electronic device 100 obtains an image by photographing the driver through a camera. Referring also to FIG. 7, the electronic device 100 may obtain an image 700 by photographing the upper body, including the face, neck, chest, and abdomen of the driver using a camera.

In operation S620 of FIG. 6, the electronic device 100 extracts feature points of both shoulders and feature points of both pelvis of the driver from the image and calculates the center of gravity point. In an embodiment of the present disclosure, the electronic device 100 may recognize key feature points of body parts from an image of a driver by performing vision recognition using an artificial intelligence model. A detailed description of vision recognition using an artificial intelligence model is the same as operation S420 of FIG. 4, and thus a redundant description is omitted. Referring also to the embodiment illustrated in FIG. 7, the processor 120 (see FIG. 3) of the electronic device 100 may extract the feature points of both shoulders P₁ and P₂ and the feature points of both pelvis P₃ and P₄ from the image 700 by performing vision recognition that inputs the image 700 to an artificial intelligence model. However, the present disclosure is not limited thereto, and the processor 120 may also extract the feature points of both shoulders P₁ and P₂ and the feature points of both pelvis P₃ and P₄ from the image 700 by using known image processing technology.

The processor 120 may construct a virtual polygon based on the extracted feature points of both shoulders P₁ and P₂ and feature points of both pelvis P₃ and P₄ and calculate a center of gravity point P_{G} of the virtual polygon. The processor 120 may identify the location of the respiration center point by moving the center axis around the calculated center of gravity point P_{G}.

Referring back to FIG. 6, in operation S630, the electronic device 100 determines at least one of a chest area and an abdominal area based on the center of gravity point. Referring also to FIG. 7, the processor 120 of the electronic device 100 may determine an area of a certain size centered on the location of the center of gravity point P_{G} as an area of the chest 710. In an embodiment of the present disclosure, the processor 120 may determine an area of a certain size as an area of the abdomen 720 centered on a point spaced apart by a preset distance d from the center of gravity point P_{G}.

In the embodiment illustrated in FIG. 7, the electronic device 100 is shown to determine both the chest 710 and the abdomen 720 from the image 700, but the embodiments of the present disclosure are not limited to those illustrated. In an embodiment of the present disclosure, the processor 120 of the electronic device 100 may determine only an area of the chest 710 or only an area of the abdomen 720.

In operation S640 of FIG. 6, the electronic device 100 obtains a respiration signal by detecting movement of at least one of the chest area and abdominal area. In operation S650, the electronic device 100 obtains a respiration waveform by filtering the respiration signal. Operations S640 and S650 of FIG. 6 are the same as operations S440 and S450 shown in FIG. 4, and thus a redundant description is omitted.

After operation S650 is performed, operation S220 shown in FIG. 2 may be performed.

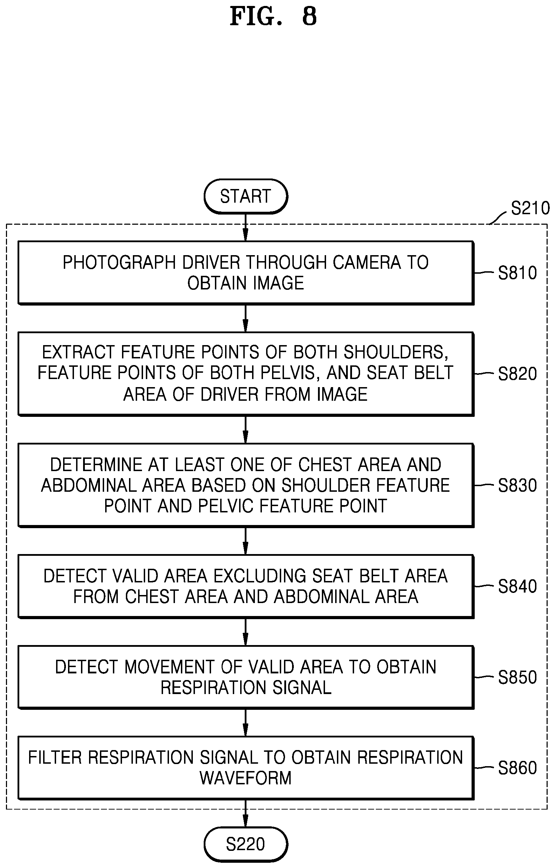

FIG. 8 is a flowchart illustrating a method by which the electronic device 100 obtains a respiration signal of a driver, according to an embodiment of the present disclosure.

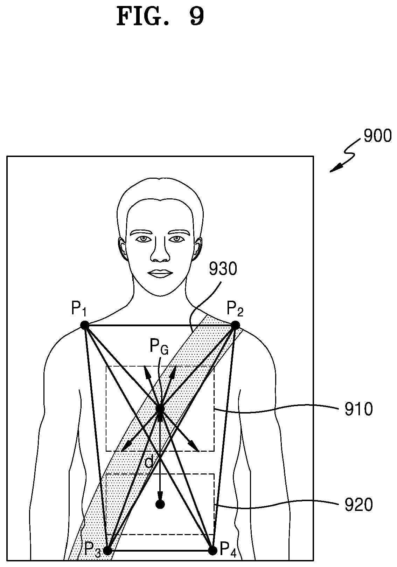

FIG. 9 is a diagram illustrating an operation in which the electronic device 100 obtains a respiration signal from a valid area excluding a seat belt from the entire area of an image of a driver, according to an embodiment of the present disclosure.

Hereinafter, with reference to FIG. 8 and FIG. 9, a function and/or an operation in which the electronic device 100 according to an embodiment of the present disclosure obtains a respiration signal from the valid area excluding an area of a seat belt 930 will be described in detail.

Operations S810 to S850 illustrated in FIG. 8 are obtained by embodying operation S210 of FIG. 2. Referring to FIG. 8, in operation S810, the electronic device 100 obtains an image by photographing the driver through a camera. Referring also to FIG. 9, the electronic device 100 may obtain an image 900 by photographing the upper body, including the face, neck, chest, and abdomen of the driver using a camera.

In operation S820 of FIG. 8, the electronic device 100 extracts, from the image, the feature points of both shoulders, feature points of both pelvis, and seat belt area of the driver. In an embodiment of the present disclosure, the electronic device 100 may recognize key feature points of body parts and the seat belt area from an image of a driver by performing vision recognition using an artificial intelligence model. A detailed description of vision recognition using an artificial intelligence model is the same as operation S420 of FIG. 4, and thus a redundant description is omitted. Referring also to the embodiment illustrated in FIG. 9, the processor 120 (see FIG. 3) of the electronic device 100 may extract the feature points of both shoulders P₁ and P₂, the feature points of both pelvis P₃ and P₄, and the seat belt 930 from the image 900 by performing vision recognition that inputs the image 900 to an artificial intelligence model. However, the present disclosure is not limited thereto, and the processor 120 may also extract the feature points of both shoulders P₁ and P₂, the feature points of both pelvis P₃ and P₄, and the seat belt 930 from the image 900 by using known image processing technology.

Referring back to FIG. 8, in operation S830, the electronic device 100 determines at least one of a chest area and an abdominal area based on the shoulder feature point and the pelvic feature point. With reference to the embodiment illustrated in FIG. 9, the processor 120 may construct a virtual polygon based on the extracted feature points of both shoulders P₁ and P₂ and feature points of both pelvis P₃ and P₄ and calculate the center of gravity point P_{G} of the virtual polygon. The processor 120 may determine an area of a certain size centered on the calculated center of gravity point P_{G} as an aera of a chest 910. In an embodiment of the present disclosure, the processor 120 may determine an area of a certain size as an area of the abdomen 920 centered on a point spaced apart by a preset distance d from the center of gravity point P_{G}.

In the embodiment illustrated in FIG. 9, the electronic device 100 is shown to determine both the chest 910 and the abdomen 920 from the image 900, but the embodiments of the present disclosure are not limited to those illustrated. In an embodiment of the present disclosure, the processor 120 of the electronic device 100 may determine only an area of the chest 910 or only an area of the abdomen 920.

In operation S840 of FIG. 8, the electronic device 100 detects a valid area excluding the seat belt area from the chest area and the abdominal area. Referring also to FIG. 9, the processor 120 may segment areas of the chest 910 and the abdomen 920 that are covered by the seat belt 930 and remove the seat belt 930 from the entire area of the image 900. The processor 120 may determine as a valid area at least one of the chest 910 and the abdomen 920 from which the seat belt 930 has been removed.

In operation S850 of FIG. 8, the electronic device 100 obtains a respiration signal by detecting the movement of the valid area. A detailed method of obtaining the respiration signal is the same as operation S440 shown in FIG. 4, and thus a redundant description is omitted.

In operation S860 of FIG. 8, the electronic device 100 obtains a respiration waveform by filtering the respiration signal. Operation S860 of FIG. 8 is the same as operation S450 shown in FIG. 4, and thus a redundant description is omitted.

After operation S860 is performed, operation S220 shown in FIG. 2 may be performed.

While light reflectance analysis and optical flow analysis technologies are effective in a static measurement environment in which there is no movement of a subject (e.g., driver), the accuracy of respiration signal measurement may decrease in a vehicle environment in which movement is frequent. In the embodiments illustrated in FIGS. 4 to 9, the electronic device 100 may measure depth information based on a distance from a camera to a shoulder length and a seat position that are measured through the feature points of both shoulders P₁ and P₂ when body movement of the driver occurs and compensate for the amount of light in the respiration detection area of the driver (e.g., chest or abdomen) as a depth value increases or decreases. Through this, the electronic device 100 according to an embodiment of the present disclosure may continuously and consistently measure the respiration signal of the driver.

In particular, in the embodiment illustrated in FIGS. 8 and 9, the electronic device 100 may prevent occurrence of artifacts in the respiration signal caused by a difference in light reflectivity, which occurs when the body part of the driver is covered by the seat belt 930 (see FIG. 9), and thus movement due to respiration may be more precisely detected and the accuracy of the respiration signal may be improved.

FIG. 10 is a flowchart illustrating a method by which the electronic device 100 obtain a respiration signal by selecting a certain area among a plurality of areas included in a body part of a driver, according to an embodiment of the present disclosure.

FIG. 11 is a diagram illustrating an operation in which the electronic device 100 obtain a respiration signal by selecting a certain area of a plurality of areas 1110 to 1140 included in a body part from an image 1100 of a driver, according to an embodiment of the present disclosure.

Hereinafter, with reference to FIG. 10 and FIG. 11, a function and/or an operation in which the electronic device 100 according to an embodiment of the present disclosure obtain a respiration signal by selecting a certain area of the plurality of areas 1110 to 1140 included in the body part from the image 1100 of the driver will be described in detail.

Operations S1010 to S1040 illustrated in FIG. 10 are obtained by embodying operation S210 of FIG. 2. Referring to FIG. 10, in operation S1010, the electronic device 100 divides the body parts of the driver included in the image obtained through the camera into a plurality of areas. In an embodiment of the present disclosure, the electronic device 100 may recognize and divide key feature points of body parts from an image of a driver by performing vision recognition using an artificial intelligence model. In an embodiment of the present disclosure, the 'artificial intelligence model' may be implemented as a deep neural network model trained to detect and classify an object (e.g., face, neck, chest, and abdomen) from input image data and to segment the object. In the present disclosure, the 'deep neural network model' may be an end-to-end model trained using a supervised learning method that applies images of tens of thousands or hundreds of millions of multiple body parts as input data, and applies label values representing classification information of the body parts, such as face, neck, chest, and abdomen, which are mathematically embedded label values, as ground truth values. The deep neural network model may be implemented, for example, as a convolutional neural network (CNN), but is not limited thereto. The deep neural network model may be implemented, for example, as recurrent neural network (RNN), restricted Boltzmann machine (RBM), deep belief network (DBN), bidirectional recurrent deep neural network (BRDNN), or deep Q-network.

Referring also to the embodiment illustrated in FIG. 11, the processor 120 (see FIG. 3) of the electronic device 100 may input the image 1100 obtained by photographing a driver through a camera into an artificial intelligence model and recognize body parts of the driver, such as a face 1110, a neck 1120, a chest 1130, and an abdomen 1140, from the image 1100 by performing vision recognition using the artificial intelligence model. The processor 120 may divide each of the recognized face 1110, neck 1120, chest 1130, and abdomen 1140.

However, the processor 120 is not limited thereto, and in an embodiment of the present disclosure, the processor 120 may recognize a body part of a driver from the image 1100 by using known image processing technology and divide the recognized body part into a plurality of areas, for example, the face 1110, the neck 1120, the chest 1130, and the abdomen 1140.

Referring back to FIG. 10, in operation S1020, the electronic device 100 detects movement of the plurality of divided areas and obtains a respiration signal including at least one of a respiration waveform and a respiration intensity from each of the plurality of areas. In an embodiment of the present disclosure, the processor 120 of the electronic device 100 may obtain a respiration signal by recognizing and tracking fine movement from a plurality of areas by using any one of the light reflectance analysis technology, the optical flow analysis technology, or the skin light absorption analysis technology. A method of obtaining a respiration signal by using the light reflectance analysis, optical flow analysis, skin light absorption analysis technologies, or the like is the same as that described with reference to FIGS. 2 and FIGS. 3, and thus a redundant description is omitted. Referring also to FIG. 11, the processor 120 may obtain a first respiration signal 1112 regarding the face 1110 by recognizing and tracking the fine movements of the face 1110. Likewise, the processor 120 may obtain a second respiration signal 1122 by recognizing and tracking the fine movement of the neck 1120, obtain a third respiration signal 1132 by recognizing and tracking the fine movement of the chest 1130, and obtain a fourth respiration signal 1142 by recognizing and tracking the fine movement of the abdomen 1140.

Referring back to FIG. 10, in operation S1030, the electronic device 100 selects an optimal area among a plurality of areas for monitoring the respiration signal of the driver based on at least one of the pattern consistency of the respiration waveform and the change amount of respiration intensity. The electronic device 100 may determine a degree of stability of the respiration waveform and respiration intensity based on vehicle vibration or body movement, and may adaptively select the optimal area among a plurality of areas of the body of the driver, which may most appropriately monitor respiration. In an embodiment of the present disclosure, a reference for determining the 'degree of stability of the respiration waveform and respiration intensity' may include at least one of the pattern consistency of the respiration waveform and the change amount of respiration intensity. For example, when the respiration waveform changes irregularly or the change amount of respiration intensity changes to a value exceeding a preset range, the electronic device 100 may determine that the respiration waveform and respiration intensity are not stable.

Referring also to the embodiment illustrated in FIG. 11, the processor 120 of the electronic device 100 may analyze the pattern of the respiration waveform and the change amount of respiration intensity of the first respiration signal 1112 to the fourth respiration signal 1142, select the third respiration signal 1132 in which the respiration signal is most stable among the first respiration signal 1112 to the fourth respiration signal 1142, and select the chest 1130, which is a body area in which the selected third respiration signal 1132 is measured, as the optimal area for monitoring the respiration signal. In FIG. 11, the selection of the chest 1130 is merely an example for convenience of explanation, and the electronic device 100 according to an embodiment of the present disclosure is not limited to selecting the chest 1130 as an optimal area for monitoring a respiration signal among the plurality of areas 1110 to 1140.

Referring back to FIG. 10, in operation S1040, the electronic device 100 obtains a respiration signal of a selected area in real time. Referring also to FIG. 11, the processor 120 of the electronic device 100 may recognize and track fine movement of the chest 1130 caused by respiration of the driver and obtain the third respiration signal 1132 caused by thoracic respiration in real time.

After operation S1040 is performed, operation S220 shown in FIG. 2 may be performed.

In general, a relatively accurate respiration signal may be obtained from the chest or the abdomen of a vehicle driver, but when the driver wears thick outerwear (e.g., padded jacket, down jacket, and jumper), it may be difficult to measure and obtain fine respiration signals. Conversely, when the driver wears accessories such as sunglasses, a mask, a hijab, or a scarf, the accuracy of respiration signals from the face, and the neck may be low. The electronic device 100 according to the embodiment illustrated in FIGS. 10 and 11 may divide the body part of the driver into the plurality of areas 1110 to 1140 from the image 1100 obtained through a camera, dynamically select an optimal area among the plurality of areas 1110 to 1140 for measuring and monitoring a respiration signal, and obtain a respiration signal from the selected areas, thereby improving the accuracy of the respiration signal.

In an embodiment of the present disclosure, the processor 120 of the electronic device 100 may detect abnormal respiration by merging the first respiration signal 1112 to the fourth respiration signal 1142 respectively obtained from the plurality of areas 1110 to 1140 and monitoring the merged respiration signals in real time. As the respiration waveforms of the first respiration signal 1112 to the fourth respiration signal 1142 respectively obtained from the plurality of areas 1110 to 1140 are merged, even when the respiration signal is distorted due to movement occurring in some of the plurality of areas 1110 to 1140 or vehicle vibration, the distortion may be compensated and canceled out by the respiration signal of another area, thereby improving the accuracy of the respiration signal.

FIG. 12 is a flowchart illustrating a method by which the electronic device 100 corrects a respiration signal based on motion information resulting from vehicle vibration or body movement of a driver, according to an embodiment of the present disclosure.

FIG. 13 illustrates graphs 1300 and 1310 for explaining an operation in which the electronic device 100 corrects a respiration signal based on motion information resulting from vehicle vibration or body movement of a driver, according to an embodiment of the present disclosure.

Hereinafter, with reference to FIG. 12 and FIG. 13, a function and/or an operation in which the electronic device 100 according to an embodiment of the present disclosure corrects a respiration signal based on motion information caused by vehicle vibration or body movement of the driver will be described in detail.

Operations S1210 to S1230 illustrated in FIG. 12 are obtained by embodying operation S210 of FIG. 2. Referring to FIG. 12, in operation S1210, the electronic device 100 obtains motion information resulting from vehicle vibration or body movement of the driver. Referring also to FIG. 13, the processor 120 (see FIG. 3) of the electronic device 100 may obtain a respiration waveform graph 1300 representing a respiration signal over time based on an image obtained through a camera. The processor 120 may obtain a motion signal graph 1310 representing a motion measurement value by measuring vehicle vibration or body movement of the driver over time.

Referring back to FIG. 12, in operation S1220, the electronic device 100 identifies a time period in which motion information is detected from the respiration waveform. In an embodiment of the present disclosure, the processor 120 of the electronic device 100 may identify a time period in which a motion signal exceeds a preset threshold. Referring to the graphs 1300 and 1310 illustrated in FIG. 13, the processor 120 may identify a plurality of time periods 1312, 1314, and 1316 in which a motion signal value exceeds a preset threshold from the motion signal graph 1310. The processor 120 may identify time periods 1302, 1304, and 1306 in which distortion of the respiration signal occurs by measuring the respiration signal value of the respiration waveform graph 1300 in a time period corresponding to the identified time periods 1312, 1314, and 1316. In the identified time periods 1302, 1304, and 1306, the respiration pattern of inhalation/exhalation is not constant, and the breaths per minute are distorted and have a value exceeding original breaths per minute of the driver.

Referring back to FIG. 12, in operation S1230, the electronic device 100 corrects the respiration signal of the respiration waveform in the identified time period. In an embodiment of the present disclosure, the processor 120 of the electronic device 100 may correct the respiration signal by removing abnormal signals that exceed a preset threshold value among the respiration signal values in a time period in which the respiration signal is distorted by motion artifacts caused by vehicle vibration or body movement of the driver.

In an embodiment of the present disclosure, the processor 120 may correct the respiration signal by performing smoothing processing on the respiration signal in a time period in which the respiration signal is distorted using a filter. The processor 120 may smooth the respiration signal distorted by motion artifacts by using, for example, a median filter or a Savgol filter.

In an embodiment of the present disclosure, the processor 120 may correct the respiration signal by adjusting a peak distance for observing a peak value of the respiration signal in a time period in which the respiration signal is distorted. The processor 120 may correct the distortion in which an inhalation/exhalation pattern is shortened by increasing the peak distance, for example, when the respiration signal is distorted by motion artifacts and the peak value is frequently measured relative to a respiration waveform of normal respiration.

After operation S1230 of FIG. 12 is performed, operation S220 shown in FIG. 2 may be performed.

When vehicle vibration or voluntary or arbitrary body movement of the driver occur, distortion may occur in light reflectivity, which may lower the accuracy of the respiration signal. The electronic device 100 according to the embodiment illustrated in FIGS. 12 and 13 may obtain a motion signal caused by vehicle vibration or body movement of the driver, identify a time period in which distortion of the respiration signal occurs due to the motion signal, and correct the respiration signal in the identified time period, thereby reducing errors such as breaths per minute, respiration intensity, and the like and improving the accuracy of the respiration signal. As a result of the experiment, the mean absolute error (MAE) of the respiration signal was reduced by 2.35 breaths per minute (bpm) and the accuracy was increased by 50.5% compared to the case without correction due to the distortion correction of the respiration signal.

FIG. 14 is a flowchart illustrating a method by which the electronic device 100 detects abnormal respiration based on rest respiration, according to an embodiment of the present disclosure.

Operations S1410 and S1420 are obtained by embodying operation S210 of FIG. 2. In operation S1410, the electronic device 100 obtains a respiration signal regarding rest respiration of the driver when the vehicle is stopped or drives at low speed. In an embodiment of the present disclosure, the processor 120 (see FIG. 3) of the electronic device 100 may receive a signal from a speedometer, a brake pedal, an auto hold, and the like of the vehicle through an electronic control unit (ECU) and identify whether the vehicle is in a stationary state or in a low-speed driving state below a preset threshold speed based on the received signal. The processor 120 may obtain a respiration signal while the driver is in a physical and/or mentally rest state by performing respiration detection while the vehicle is stationary or driving at low speed. For example, the processor 120 may obtain a respiration signal including at least one of a respiration pattern, a number of breaths, and a pattern of respiration development for each stopping time of the vehicle and calculate breaths per minute by dividing the number of peaks of respiration according to time measured during a stopping time of the vehicle (e.g., 20 seconds to several minutes) by 1 minute. The processor 120 may obtain the calculated breaths per minute as a respiration signal of rest respiration.

In operation S1420, the electronic device 100 monitors the respiration signal in real time while the vehicle drives. A detailed method by which the electronic device 100 obtains a respiration signal of a driver and monitors a respiration signal in real time has been described in detail with reference to FIGS. 2 and FIGS. 3, and thus a redundant description is omitted.

Operations S1430 and S1460 are obtained by embodying operation S220 of FIG. 2. In operation S1430, the electronic device 100 calculates a difference value between the respiration signal of the rest respiration and the respiration signal monitored in real time. In an embodiment of the present disclosure, the processor 120 of the electronic device 100 may calculate a difference value between the respiration signal monitored in real time and a reference value by using the breaths per minute of the rest respiration as the reference value.

In operation S1440, the electronic device 100 compares the calculated difference value with a threshold α. In an embodiment of the present disclosure, the 'threshold α' may be preset by a user. For example, the threshold α may be breaths per minute, but is not limited thereto.

When the calculated difference value exceeds the threshold α (operation S1450), the electronic device 100 detects abnormal respiration of the driver. In an embodiment of the present disclosure, the processor 120 of the electronic device 100 may detect abnormal respiration, such as hyperventilation, acute hyperventilation, hypopnea, transient apnea, or dyspnea, when the calculated difference value exceeds the threshold α.

When the calculated difference value exceeds the threshold α (operation S1460), the electronic device 100 detects normal respiration of the driver. When normal respiration is detected, the electronic device 100 returns to operation S1420 and monitors a respiration signal of the driver in real time while the vehicle drives.

The electronic device 100 according to the embodiment illustrated in FIG. 14 may determine whether a respiration rhythm of the driver is disrupted compared to rest respiration by monitoring respiration signal of the driver, obtained in real time, using rest respiration of the driver when the vehicle is stopped or drives at low speed as a reference value, thereby detecting abnormal respiration, and thus abnormal respiration may be detected efficiently and accurately.

FIG. 15A is a diagram illustrating an operation in which the electronic device 100 displays a respiration guide UI 1500a, according to an embodiment of the present disclosure.

Referring to FIG. 15A, the electronic device 100 may display the respiration guide UI 1500a on an instrument cluster display 140a of the vehicle. The respiration guide UI 1500a is an interface designed to alleviate abnormal respiration and protect the driver by providing guide information for self-regulation of respiration of the driver. In the embodiment illustrated in FIG. 15A, the respiration guide UI 1500a may include a respiration waveform graph 1510 indicating a respiration pattern of inhalation/exhalation of the driver and breaths per minute, and a graphic user interface (UI) 1520 that induces self-respiration of the driver.

In an embodiment of the present disclosure, the graphic UI 1520 may include a graphic that provides a visual effect for self-respiration, such as inhalation/exhalation, compared with the respiration signal of the driver, monitored in real time. For example, the graphic UI 1520 may include a snowman-shaped graphic that includes circular graphic elements and in which the diameter of the circle increases when guiding inhalation and decreases when guiding exhalation. However, the present disclosure is not limited thereto.

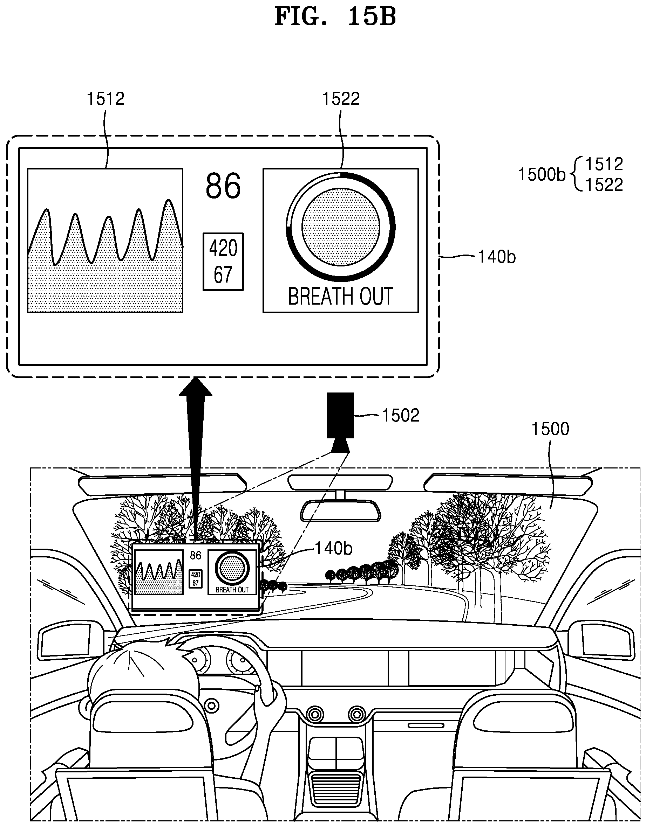

FIG. 15B is a diagram illustrating an operation in which the electronic device 100 displays a respiration guide UI 1500b, according to an embodiment of the present disclosure.

Referring to FIG. 15B, the electronic device 100 may display the respiration guide UI 1500b via a head-up display (HUD) 140b projected onto a wind shield 1500 of the vehicle. In the embodiment illustrated in FIG. 15B, the electronic device 100 may further include a projector 1502 in addition to the components illustrated in FIG. 3. The projector 1502 is an optical engine configured to project an image onto the wind shield 1500, which is a front glass window of the vehicle. The projector 1502 may be configured to generate light of an image and may be an optical engine including an image panel, a lighting optical system, and a projection optical system. In an embodiment of the present disclosure, the projector 1502 may obtain graphic data (or image data) constituting the respiration guide UI 1500b from the processor 120 (see FIG. 3), generate a virtual image based on the obtained graphic data (or image data), and project light constituting the virtual image output from a light source onto the wind shield 1500 through an emission surface. The image projected by the projector 1502 may be displayed through the HUD 140b on the wind shield 1500.

The respiration guide UI 1500b is an interface designed to alleviate abnormal respiration and protect the driver by providing guide information for self-regulation of respiration of the driver. The respiration guide UI 1500b shown in FIG. 15B is the same as the respiration guide UI 1500a shown in FIG. 15A, except that the respiration guide UI 1500b is displayed via the HUD 140b, and thus a redundant description is omitted.

When driving a vehicle, the driver receives about 80% to 90% of situational awareness information through their eyes. The electronic device 100 according to the embodiment illustrated in FIG. 15A and FIG. 15B displays the respiration guide UIs 1500a and 1500b through the instrument cluster display 140a or the HUD 140b of the vehicle such that the respiration guide UIs 1500a and 1500b may be easily viewed without interfering with driving, thereby enabling immediate respiration relaxation for a driver whose hands are not free while driving. By doing so, the electronic device 100 according to an embodiment of the present disclosure provides a technical effect that may alleviate abnormal respiration and stress of the driver and prevent occurrence of road traffic accidents.

Although not shown in FIG. 15A and FIG. 15B, the electronic device 100 may adjust the brightness and color temperature of the instrument cluster display 140a or the HUD 140b of the vehicle based on a respiration signal. In general, in a bright lighting environment with a high color temperature and high brightness, a level of physical and mental tension may increase, and an arousal effect may be induced. For example, a lighting environment with a color temperature of 3000 K and a brightness of 300 lux (lx) is a lighting environment that most alleviates both a low-stress group and a high-stress group, and a lighting environment with a color temperature of 6000 K and a brightness of 100 lux, 300 lux, and 600 lux is a lighting environment that alleviates a low-stress group. In particular, in the case of lighting of 100 lux, stress may be most relaxed. In an embodiment of the present disclosure, the memory 130 (see FIG. 3) of the electronic device 100 may store, in advance, information regarding optimal brightness and color temperature for relieving driver stress and abnormal respiration. When abnormal respiration of a driver is detected, the processor 120 (see FIG. 3) of the electronic device 100 according to an embodiment of the present disclosure may adjust the brightness and color temperature of the instrument cluster display 140a or the HUD 140b of the vehicle by loading information regarding brightness and color temperature stored in advance in the memory 130.

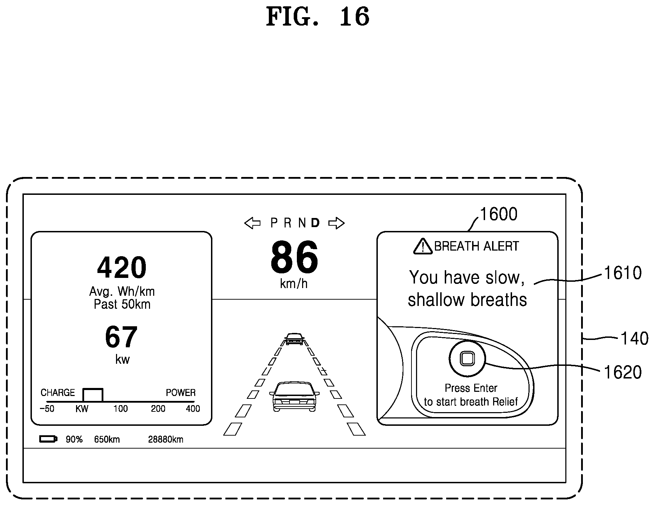

FIG. 16 is a diagram illustrating an operation in which the electronic device 100 outputs a warning UI 1600 when abnormal respiration is detected, according to an embodiment of the present disclosure.

Referring to FIG. 16, the electronic device 100 may detect hypopnea or transient apnea by monitoring a respiration signal of a driver in real time. When hypopnea or transient apnea is detected, the electronic device 100 may output the warning UI 1600 through the display 140. The warning UI 1600 may include, for example, an alert message 1610 that warns the driver of a hypopnea state and a graphic UI 1620 for executing a respiration guide UI that guides respiration readjustment to relieve hypopnea.

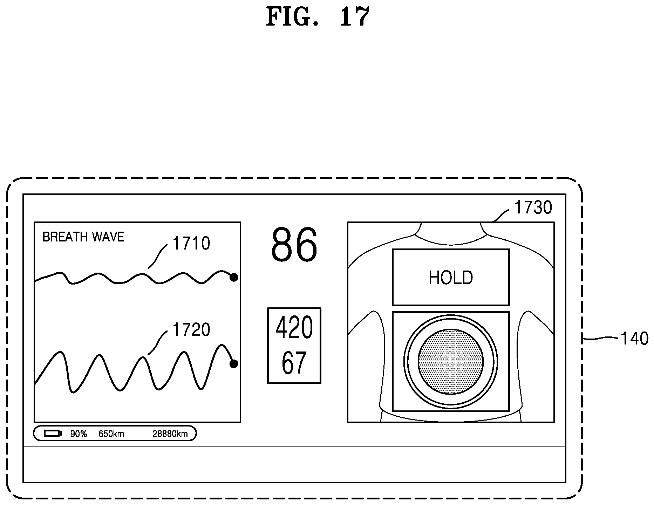

FIG. 17 is a diagram illustrating an operation in which the electronic device 100 displays together respiration waveform graphs 1710 and 1720 representing thoracic respiration and abdominal respiration of the driver and a respiration guide graphic UI 1730, according to an embodiment of the present disclosure.

Referring to FIG. 17, the electronic device 100 may obtain a respiration signal of a driver in real time and display the respiration waveform graphs 1710 and 1720 on the display 140. In an embodiment of the present disclosure, the electronic device 100 may obtain an image by photographing both the chest and the abdomen of the driver through a wide-angle camera and obtain thoracic respiration signals and abdominal respiration signals by tracking fine movements of the chest and the abdomen from the obtained image. The electronic device 100 may display a first respiration waveform graph 1710 of a thoracic respiration signal and a second respiration waveform graph 1720 of an abdominal respiration signal obtained over time, along with a respiration guide UI 1730.

The respiration guide graphic UI 1730 may include graphics that provide a visual effect for self-respiration, such as inhalation/exhalation, based on thoracic respiration signals and abdominal respiration signals obtained in real time. In the embodiment illustrated in FIG. 17, the respiration guide graphic UI 1730 may include a character (e.g., 'HOLD') guiding to temporarily stop thoracic respiration and a graphic UI guiding abdominal respiration. The 'graphic UI' is a graphic element that guides inhalation and exhalation, and may include a snowman-shaped graphic in which the diameter of the circle increases when guiding inhalation and decreases when guiding exhalation. However, the present disclosure is not limited thereto.

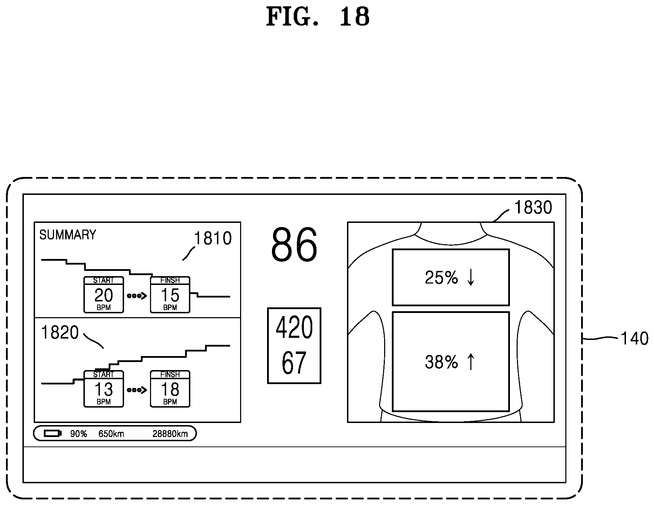

FIG. 18 is a diagram illustrating an operation in which the electronic device 100 displays a change amount of each of the thoracic respiration and abdominal respiration of the driver, according to an embodiment of the present disclosure.

Referring to FIG. 18, the electronic device 100 may display information regarding a thoracic respiration change amount 1810 and an abdominal respiration change amount 1820 over time on the display 140. The thoracic respiration change amount 1810 is a graphic UI representing a change amount in thoracic respiration signal over time, obtained by movement of the chest of the driver and may include, for example, information on a change amount of breaths per minute of thoracic respiration. The abdominal respiration change amount 1820 is a graphic UI representing a change amount in abdominal respiration signal over time, obtained by movement of the abdomen of the driver and may include, for example, information on a change amount of breaths per minute of abdominal respiration signal. In the embodiment illustrated in FIG. 18, the thoracic respiration change amount 1810 may output information indicating that the thoracic respiration of the driver has decreased from 20 bpm to 15 bpm, and the abdominal respiration change amount 1820 may output information indicating that the abdominal respiration of the driver has increased from 13 bpm to 18 bpm.

In an embodiment of the present disclosure, the electronic device 100 may display the thoracic respiration change amount 1810 and the abdominal respiration change amount 1820 along with a respiration guide graphic UI 1830. The respiration guide graphic UI 1830 may include information regarding change amounts of thoracic respiration and abdominal respiration. In the embodiment illustrated in FIG. 18, the respiration guide graphic UI 1830 may output information indicating that thoracic respiration has decreased by 25% and abdominal respiration has increased by 38%.

Abdominal respiration, compared to thoracic respiration, strengthens the parasympathetic nerves, which is effective in relieving stress and high blood pressure. It is also known that research results show that in the case of abdominal respiration for more than 80 minutes every day, systolic blood pressure is reduced from 174 mmHg to 146 mmHg and diastolic blood pressure is reduced from 97 mmHg to 81 mmHg. The electronic device 100 according to the embodiment illustrated in FIGS. 17 and 18 provides a technical effect of driver stress relief and reduction of high blood pressure by displaying respiration waveform graphs 1710 and 1720 of thoracic respiration by the chest as well as abdominal respiration by the abdomen and providing information regarding a change amount over time for each of thoracic respiration and abdominal respiration, thereby adjusting the balance between thoracic respiration and abdominal respiration.

FIG. 19 is a flowchart illustrating a method by which the electronic device 100 protects a driver when hyperventilation is detected, according to an embodiment of the present disclosure.

FIG. 20 is a diagram for explaining an operation in which the electronic device 100 protects a driver when hyperventilation is detected, according to an embodiment of the present disclosure.

Hereinafter, with reference to FIG. 19 and FIG. 20, a function and/or an operation in which the electronic device 100 protects a driver when hyperventilation is detected will be described in detail.

Referring to operation S1910 of FIG. 19, the electronic device 100 monitors a respiration signal and detects hyperventilation. Referring also to operation ① of FIG. 20, the electronic device 100 may obtain an image by photographing the driver, obtain a respiration signal 2000 from the obtained image, and detect abnormal respiration such as hyperventilation by monitoring a respiration signal 2000 in real time. A detailed method by which the electronic device 100 detects abnormal respiration is the same as described in FIGS. 2 and FIGS. 3, and thus a redundant description is omitted.

In operation S1920 of FIG. 19, the electronic device 100 outputs an alert message indicating an emergency situation. Referring also to operation ② of FIG. 20, the electronic device 100 may output on the display 140 an alert message 2010 that warns of abnormal respiration and guides automatic stop.

In operation S1930 of FIG. 19, the electronic device 100 controls driving of the vehicle to move to the shoulder and stop when there is no interaction with the driver regarding the alert message. Referring also to FIG. 20, the alert message 2010 may include a cancel button UI that releases output of the alert message and terminates a warning situation. In an embodiment of the present disclosure, when driver input to the cancel button UI is detected, the electronic device 100 may terminate the warning situation and not display the alert message 2010. However, when no driver input is received for the cancel button UI or no interaction is detected, the electronic device 100 may control driving of the vehicle to stop the vehicle on the shoulder. Referring also to operation ③ of FIG. 20, the electronic device 100 may display through the display 140 an external environment image 2020 obtained by photographing a roadside parking situation of a vehicle using an external camera.

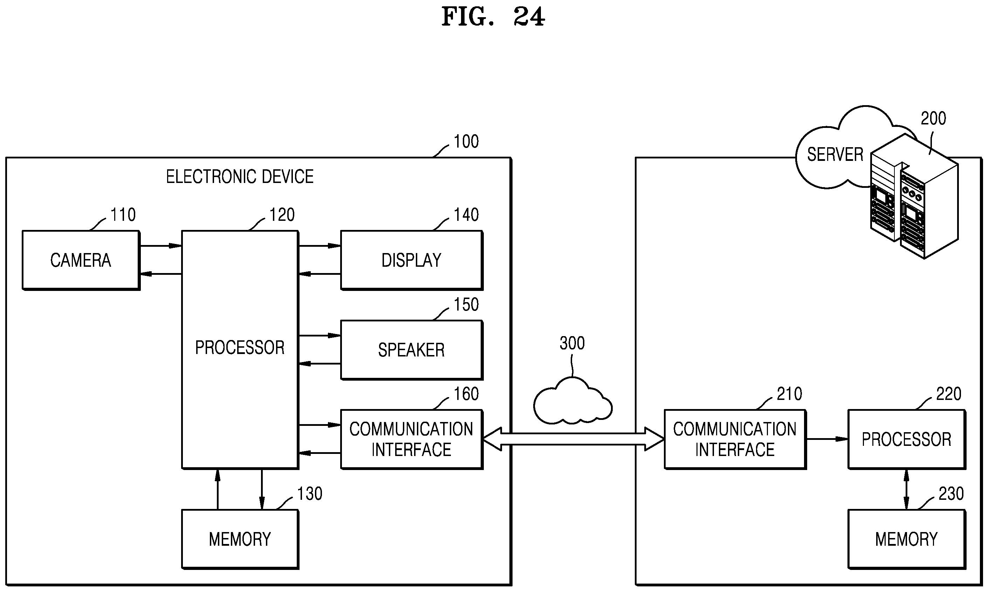

Referring back to FIG. 19, in operation S1940, the electronic device 100 makes an emergency call for a rescue request. In an embodiment of the present disclosure, the electronic device 100 may further include a communication interface 160 (see FIG. 24) and may make an emergency call for rescue request to an emergency rescue agency (e.g., fire department and medical institution) through the communication interface 160. Referring also to operation ④ of FIG. 20, the electronic device 100 may display an emergency call UI 2030 on the display 140.

In the embodiment illustrated in FIGS. 19 and 20, the electronic device 100 provides a technical effect of immediately moving and stopping the vehicle on the shoulder when hyperventilation or transient hyperventilation of the driver is detected and the vehicle is not controlled by the driver, thereby protecting the driver and preventing a traffic accident.

FIG. 21 is a block diagram illustrating an operation in which the electronic device 100 controls devices included in a vehicle 1000 when abnormal respiration of a driver is detected, according to an embodiment of the present disclosure.

Referring to FIG. 21, the vehicle 1000 may include an ECU 1010, a seat belt 1020, a steering wheel 1030, an interior lighting 1040, an ambient light 1050, and a seat 1060. FIG. 21 illustrates only components for explaining an operation in which the electronic device 100 controls devices of the vehicle 1000 as the electronic device 100 detects abnormal respiration of the driver, and the devices included in the vehicle 1000 are not limited to those shown in FIG. 21.

The electronic control unit (ECU) 1010 is an electronic device that controls functions and/or operations of devices within the vehicle, such as an engine, automatic transmission, and other drive systems of the vehicle, as well as a braking system and a steering system. A connector C is a hardware device that connects the electronic device 100 and the devices within the vehicle 1000. In an embodiment of the present disclosure, the electronic device 100 may be physically and/or electrically interconnected with the ECU 1010 through the connector C. The electronic device 100 may transmit a control signal to the ECU 1010 through the connector C.

The processor 120 (see FIG. 3) of the electronic device 100 may transmit a control signal to the ECU 1010 when abnormal respiration of the driver is detected, and control various devices of the vehicle through the ECU 1010 to alleviate the abnormal respiration of the driver and lower stress and blood pressure, thereby protecting the driver. For example, when abnormal respiration of the driver is detected, the processor 120 may relax the pressure of the seat belt 1020 through the ECU 1010. For example, the processor 120 may provide a warning notification to the driver by applying a pressure signal to the seat belt 1020 when abnormal respiration of the driver is detected.

In an embodiment of the present disclosure, when abnormal respiration of the driver is detected, the processor 120 may provide steering wheel vibration feedback by controlling the steering wheel 1030 to vibrate. For example, the processor 120 may provide a respiration guide to the driver by controlling the steering wheel 1030 to vibrate according to inhalation/exhalation timing of the driver.

In an embodiment of the present disclosure, the processor 120 may adjust the color temperature and brightness of the interior lighting 1040 and the ambient light 1050 when abnormal respiration of the driver is detected. In general, a lighting environment with a color temperature of 3000 K and a brightness of 300 lux (lx) is a lighting environment that most alleviates both a low-stress group and a high-stress group, and a lighting environment with a color temperature of 6000 K and a brightness of 100 lux, 300 lux, and 600 lux is a lighting environment that alleviates a low-stress group. For example, the processor 120 may adjust the color temperature of the interior lighting 1040 and the ambient light 1050 to 3000K and the brightness to 300 lux to alleviate abnormal respiration of the driver and lower blood pressure.

In an embodiment of the present disclosure, the processor 120 may control heating or cooling of the seat 1060 based on a respiration signal of the driver. For example, when the respiration signal of the driver is monitored in real time and symptoms of hypopnea are detected, the processor 120 may raise the temperature of the seat 1060 by controlling a heating element of the seat 1060. For example, when symptoms of hyperventilation of the driver are detected, the processor 120 may control a fan included in the seat 1060 to lower the temperature of the seat 1060 and provide a cool seat environment.

When body temperature drops below normal body temperature (e.g., 36.5°C), the functions of the respiratory and circulatory nervous systems may slow down, and driving attention may decrease. In the embodiment illustrated in FIG. 21, when the body temperature drops due to hypopnea symptoms, the electronic device 100 may raise the body temperature of the driver and improve hypopnea symptoms by controlling the heating element of the seat 1060 to raise the temperature of the seat 1060.

When symptoms of hyperventilation occur, a subject may gasp for breath, and body temperature may increase. In the embodiment illustrated in FIG. 21, when the body temperature rises due to hyperventilation symptoms, the electronic device 100 may lower the body temperature of the driver and stabilize respiration by controlling the heating element of the seat 1060 to lower the temperature of the seat 1060.

FIG. 22 is a diagram illustrating an operation performed by the electronic device 100 by using artificial intelligence technology, according to an embodiment of the present disclosure.

In detail, at least one of i) an operation of obtaining a respiration signal of the driver by detecting movement of at least one of the chest and the abdomen caused by respiration of the driver from an image obtained through the camera 110 (see FIG. 1 and FIG. 3), ii) an operation of detecting abnormal respiration including at least one of hyperventilation, hypopnea, transient apnea, and dyspnea by monitoring the respiration signal in real time, and iii) an operation of displaying a respiration guide user interface (UI) that provides a respiration exercise guide to alleviate abnormal respiration by readjusting the respiration of the driver as abnormal respiration is detected, which are performed by the electronic device 100, may be performed using artificial intelligence (AI) technology that performs computations through a neural network.

Artificial intelligence technology (hereinafter referred to as 'AI technology') is a technology that obtains desired results by processing input data, such as analyzing and/or classifying the input data, based on computations through a neural network.

The AI technology may be implemented by utilizing algorithms. Here, an algorithm or a set of algorithms for implementing AI technology is called a neural network. Here, the neural network may receive input data, perform computations the analysis and/or classification described above, and output result data. For a neural network to accurately output result data corresponding to the input data, the neural network needs to be trained. Here, 'training' may refer to training the neural network such that the neural network may independently discover or learn a method of analyzing input data, a method of classifying input data, and/or a method of extracting a feature required to generate output data from input data. In detail, through a training process, the neural network may optimize weight values within the neural network by training the training data (e.g., multiple different images). The desired result may be output by processing input data through a neural network with an optimized weight value.

A neural network may be classified as a deep neural network when the number of hidden layers, which are internal layers that perform computations, is plural, that is, when a depth of the neural network performing computations increases. The neural network includes, for example, a convolutional neural network, a recurrent neural network, a restricted Boltzmann machine, a deep belief network, a bidirectional recurrent deep neural network, and a deep Q-network, but are not limited to the examples described above. In addition, the neural network may be subdivided. For example, the convolutional neural network may be subdivided into deep convolutional neural network (D-CNN), a Capsnet neural network (not shown), or the like.

An 'AI model' may refer to a neural network including at least one layer that receives input data and operates to output a desired result. The 'AI model' may refer to an algorithm that outputs a desired result by performing computations through a neural network, a set of a plurality of algorithms, a processor for executing an algorithm (or a set of algorithms), software for executing an algorithm (or a set of algorithms), or hardware for executing an algorithm (or a set of algorithms).

At least one of i) the operation of obtaining a respiration signal of the driver by detecting movement of at least one of the chest and the abdomen caused by respiration of the driver from an image obtained through the camera 110, ii) the operation of detecting abnormal respiration including at least one of hyperventilation, hypopnea, transient apnea, and dyspnea by monitoring the respiration signal in real time, and iii) the operation of displaying a respiration guide user interface (UI) that provides a respiration exercise guide to alleviate abnormal respiration by readjusting the respiration of the driver as abnormal respiration is detected, described above, may be performed based on the AI model.

Referring to FIG. 22, a neural network 2200 may be trained by receiving training data as input. The trained neural network 2200 may receive input data 2210 at an input end 2220, and the input end 2220, a hidden layer 2230, and an output end 2240 may perform computations for outputting output data 2250 by analyzing the input data 2210 and data transmitted from a previous layer. In FIG. 22, the hidden layer 2230 is shown as a single layer, but this is merely an example, and the hidden layer 2230 may include a plurality of layers.

In the described embodiment, the neural network 2200 may be trained to i) divide a body part of a driver included in an image obtained through the camera 110 into a plurality of areas, ii) detect movement of the plurality of divided areas to obtain a respiration signal including at least one of a respiration waveform and a respiration intensity from each of the plurality of areas, iii) select an optimal area among the plurality of areas to monitor the respiration signal of the driver based on at least one of the pattern consistency of the respiration waveform and the change amount of the respiration intensity, and iv) obtain the respiration signal of the selected area in real time.

In the described embodiment, the neural network 2200 may be trained to i) merge respiration signals obtained from each of the plurality of areas, and ii) monitor the merged respiration signals in real time to detect abnormal respiration.

In the described embodiment, the neural network 2200 may be trained to i) obtain a respiration signal regarding the rest respiration of the driver when a vehicle is stopped or drives at a low speed below a preset threshold speed, and ii) detect abnormal respiration by determining whether a difference between the respiration signal of the rest respiration and the respiration signal of the driver, monitored in real time, exceeds a preset threshold.

In the described embodiment, the neural network 2200 may be trained to display the respiration waveform of the respiration signal obtained in real time along with a respiration exercise guide.

In the described embodiment, the neural network 2200 may be trained to i) display together the respiration waveforms of the thoracic respiration signal obtained from the chest movement of the driver and the abdominal respiration signal obtained from the abdominal movement of the driver among the respiration signals, and ii) display information regarding the real-time change amount of each of the thoracic respiration signal and the abdominal respiration signal.

In the described embodiment, the neural network 2200 may be trained to i) determine a time point to display a respiration guide UI based on at least one of whether the vehicle drives autonomously and a situation in which the driver intervenes in driving the vehicle and ii) display a respiration guide UI at the determined time point.

In the described embodiment, the neural network 2200 may be trained to i) output an alert message indicating an emergency situation when hyperventilation of abnormal respiration is detected, ii) control driving of the vehicle to move to the shoulder and stop when there is no interaction with the driver regarding the output alert message, and iii) make an emergency call for a rescue request.

In the described above, data or program code related to a neural network 2200 that performs at least one of i) the operation of obtaining a respiration signal of the driver by detecting movement of at least one of the chest and the abdomen caused by respiration of the driver from an image obtained through the camera 110, ii) the operation of detecting abnormal respiration including at least one of hyperventilation, hypopnea, transient apnea, and dyspnea by monitoring the respiration signal in real time, and iii) the operation of displaying a respiration guide user interface (UI) that provides a respiration exercise guide to alleviate abnormal respiration by readjusting the respiration of the driver as abnormal respiration is detected, described above, may be stored in the memory 130 (see FIG. 3), and training using the neural network 2200 may be performed by the processor 120 (see FIG. 3). In this case, the processor 120 may include an artificial intelligence-dedicated processor such as a neural processing unit (NPU).

In the described above, data or program code related to a neural network 2200 that performs at least one of i) the operation of obtaining a respiration signal of the driver by detecting movement of at least one of the chest and the abdomen caused by respiration of the driver from an image obtained through the camera 110, ii) the operation of detecting abnormal respiration including at least one of hyperventilation, hypopnea, transient apnea, and dyspnea by monitoring the respiration signal in real time, and iii) the operation of displaying a respiration guide user interface (UI) that provides a respiration exercise guide to alleviate abnormal respiration by readjusting the respiration of the driver as abnormal respiration is detected, described above, may be stored in the memory 130, and training using the neural network 2200 may be performed by the processor 120.

However, the present disclosure is not limited thereto, the neural network 2200 that performs at least one of i) the operation of obtaining a respiration signal of the driver by detecting movement of at least one of the chest and the abdomen caused by respiration of the driver from an image obtained through the camera 110, ii) the operation of detecting abnormal respiration including at least one of hyperventilation, hypopnea, transient apnea, and dyspnea by monitoring the respiration signal in real time, and iii) the operation of displaying a respiration guide user interface (UI) that provides a respiration exercise guide to alleviate abnormal respiration by readjusting the respiration of the driver as abnormal respiration is detected, described above, may be implemented in a separate device (not shown) or processor (not shown) distinct from the electronic device 100.

The computations through the neural network 2200 described above may also be performed by a server 200 (see FIG. 23 and FIG. 24) capable of communicating with the electronic device 100 according to an embodiment through a wireless communication network. Communication between the electronic device 100 and the server 200 is described with reference to FIGS. 23 and FIGS. 24.

FIG. 23 is a diagram illustrating the electronic device 100 in conjunction with the server 200, according to the described embodiment.

FIG. 24 is a diagram for describing FIG. 23 in detail.

The electronic device 100 may include the camera 110, the processor 120, the memory 130, the display 140, and the speaker 150. Referring to FIG. 24, the electronic device 100 may further include the communication interface 160. The camera 110, the processor 120, the memory 130, the display 140, and the speaker 150 shown in FIG. 24 are the same as the camera 110 (see FIG. 3), the processor 120 (see FIG. 3), the memory 130 (see FIG. 3), the display 140 (see FIG. 3), and the speaker 150 (see FIG. 3) shown and described in FIG. 3, and thus a redundant description is omitted.

The server 200 may transmit and receive data with the electronic device 100 and process data through a communication network 300.

Referring also to FIG. 23 and FIG. 24, the server 200 may include a communication interface 210 that communicates with the electronic device 100, a processor 220 that performs at least one instruction, and memory 230.

The server 200 may train an AI model and store the trained AI model. The server 200 may perform at least one of i) the operation of obtaining a respiration signal of the driver by detecting movement of at least one of the chest and the abdomen caused by respiration of the driver from an image obtained through the camera 110, ii) the operation of detecting abnormal respiration including at least one of hyperventilation, hypopnea, transient apnea, and dyspnea by monitoring the respiration signal in real time, and iii) the operation of displaying a respiration guide user interface (UI) that provides a respiration exercise guide to alleviate abnormal respiration by readjusting the respiration of the driver as abnormal respiration is detected, described above, using the trained AI model.

Generally, the electronic device 100 may have limited storage capacity of the memory 130 (see FIG. 3), computation processing speed of the processor 120 (see FIG. 3), and collection capability of training dataset compared to the server 200. Accordingly, an operation requiring storage of large amounts of data and large amounts of computations may be performed on the server 200, and then the necessary data and/or the AI model may be transmitted to the electronic device 100 through a communication network. The electronic device 100 may perform required operations quickly and easily by receiving and utilizing required data and/or AI models through the server 200 without a processor having large memory and fast computation capabilities.

In the described embodiment, the server 200 may include the neural network 2200 described with reference to FIG. 22.

In FIG. 24, the components of the server 200 will be described in detail. Referring to FIG. 24, the server 200 may include the communication interface 210, the processor 220, and the memory 230.

The communication interface 210 communicates with an external device through a wireless communication network. Here, an external device (not shown) may include a server that may perform at least one of computations required by the electronic device 100 or transmit data required by the electronic device 100.

The communication interface 210 includes at least one communication module, such as a short-range communication module, a wired communication module, a mobile communication module, and a broadcast receiving module. Here, at least one communication module means a communication module that may transmit and receive data through a network that conforms to a communication standard such as a tuner that performs broadcast reception, Bluetooth, Wi-Fi, wireless broadband (Wibro), world interoperability for microwave access (WiMAX), CDMA, WCDMA, the Internet, 3G, 4G, 5G and/or a communication method using millimeter wave (mmWave).

A mobile communication module included in the communication interface 210 may communicate with another device located at a distance (e.g., the electronic device 100) through a communication network conforming to communication standards such as 3G, 4G (LTE), and/or 5G. Here, a communication module that communicates with another device located at a distance may be called a 'long-range communication module'. In an embodiment of the present disclosure, the electronic device 100 may further include the communication interface 160, and the communication interface 160 of the server 200 may transmit and receive data via wired or wireless connection with the communication interface 160 of the electronic device 100.

The processor 220 controls the overall operation of the server 200. For example, the processor 220 may perform the required operations by executing at least one of at least one instruction and programs of the server 200.

The memory 230 may store at least one of at least one instruction, program, and data required for the server 200 to perform a certain operation. The memory 230 may store data required for the server 200 to perform computations according to a neural network.

In the described embodiment, the server 200 may store the neural network 2200 described with reference to FIG. 22. The neural network 2200 may be stored in at least one of the processor 220 and the memory 230. The neural network 2200 included in the server 200 may be a trained neural network.

The server 200 may transmit the trained neural network 2200 (see FIG. 22) to the communication interface 160 of the electronic device 100 through the communication interface 210. The electronic device 100 may obtain and store the trained neural network 2200 and obtain desired output data through the neural network 2200.

The present disclosure provides a method by which the electronic device 100 mounted in the vehicle 1000 detects respiration of the driver of the vehicle 1000 and provides a respiration guide for driver protection. An operating method of the electronic device 100 according to an embodiment of the present disclosure may include detecting movement of at least one of the chest and the abdomen caused by the respiration of the driver from an image obtained through the camera 110 to obtain a respiration signal of the driver (S210). The operating method of the electronic device 100 according to an embodiment of the present disclosure may include detecting abnormal respiration including at least one of hyperventilation, hypopnea, transient apnea, and dyspnea by monitoring the obtained respiration signal in real time (S220). The operating method of the electronic device 100 according to an embodiment of the present disclosure may include in response to the abnormal respiration being detected, displaying a respiration guide user interface (UI) that provides a respiration exercise guide to alleviate abnormal respiration by readjusting respiration of the driver (S230).

In an embodiment of the present disclosure, the obtaining of the respiration signal may include dividing a body part of a driver included in an image obtained through the camera 110 into a plurality of areas (S1010), and obtaining a respiration signal including at least one of a respiration waveform and a respiration intensity from each of the plurality of areas (S1020). The obtaining of the respiration signal (S210) may include selecting an optimal area among a plurality of areas for monitoring the respiration signal of the driver' based on at least one of the pattern consistency of the respiration waveform and the change amount of respiration intensity (S1030), and obtaining the respiration signal of the selected area in real time (S1040).

In an embodiment of the present disclosure, the obtaining of the respiration signal (S210) may include merging the respiration signals obtained from each of a plurality of areas. The detecting of abnormal respiration (S220) may include detecting abnormal respiration by monitoring the merged respiration signal in real time.

In an embodiment of the present disclosure, the obtaining of the respiration signal (S210) may include obtaining motion information resulting from vibration of the vehicle 1000 or body movement of the driver (S1210). The obtaining of the respiration signal (S210) may further include identifying a time period in which motion information is detected from the respiration waveform according to a flow of time of the respiration signal (S1220), and correcting the respiration signal of the respiration waveform in the identified time period (S1230).

In an embodiment of the present disclosure, the obtaining of the respiration signal (S210) may include obtaining a respiration signal regarding rest respiration of the driver when the vehicle 1000 is stopped or drives at a low speed below a preset threshold speed (S1410). The detecting of the abnormal respiration (S220) may include calculating a difference value between a respiration signal of rest respiration and a respiration signal of a driver monitored in real time (S1430), and detecting abnormal respiration by determining whether the calculated difference value exceeds a preset threshold (S1440 and S1450).

In an embodiment of the present disclosure, the displaying of the respiration guide UI (S230), the electronic device 100 may display the respiration guide UI on the instrument cluster of the vehicle 1000.

In an embodiment of the present disclosure, in the displaying of the respiration guide UI (S230), the electronic device 100 may display the respiration waveform of the respiration signal obtained in real time along with a respiration exercise guide.

In an embodiment of the present disclosure, the displaying of the respiration guide UI (S230) may include displaying along with the respiration waveforms of the thoracic respiration signal obtained from the chest movement of the driver and the abdominal respiration signal obtained from the abdominal movement of the driver among the respiration signals. The displaying of the respiration guide UI (S230) may include displaying information regarding the real-time change amount of each of the thoracic respiration signal and the abdominal respiration signal.

In an embodiment of the present disclosure, the operating method of the electronic device 100 outputting an alert message indicating an emergency situation when hyperventilation of abnormal respiration is detected (S1910). The operating method of the electronic device 100 may further include controlling driving of the vehicle 1000 to move to the shoulder and stop when there is no interaction with the driver corresponding to the output alert message (S1920). The operating method of operation of the electronic device 100 may further include making an emergency call for a rescue request (S1930).

The present disclosure provides the electronic device 100 in the vehicle 1000 that detects respiration of the driver and provides a guide for driver protection. The electronic device 100 according to an embodiment of the present disclosure may include the display 140, the camera 110 configured to obtain an image by photographing the driver, at least one processor 120 including a processing circuit, and the memory 130 storing one or more instructions. The one or more instructions, when executed by the at least one processor 120 individually or collectively, and thus the electronic device 100 may detect movement of at least one of the chest and the abdomen caused by respiration of the driver from an image obtained through the camera 110 and obtain a respiration signal of the driver. The one or more instructions, when executed by the at least one processor 120 individually or collectively, and thus the electronic device 100 may detect abnormal respiration including at least one of hyperventilation, hypopnea, transient apnea, and dyspnea by monitoring a respiration signal in real-time. The one or more instructions, when executed by the at least one processor 120 individually or collectively, and thus the electronic device 100 may display a respiration guide user interface (UI) on the display 140 that provides a respiration exercise guide to alleviate abnormal respiration by readjusting respiration of the driver in response to the abnormal respiration being detected.

In an embodiment of the present disclosure, the one or more instructions, when executed by the at least one processor 120 individually or collectively, and thus the electronic device 100 may divide the body part of the driver included in an image obtained through the camera 110 into a plurality of areas, detect movement of the divided plurality of areas, and obtain a respiration signal including at least one of a respiration waveform and a respiration intensity from each of the plurality of areas. The one or more instructions, when executed by the at least one processor 120 individually or collectively, and thus the electronic device 100 may select an optimal area among a plurality of areas for monitoring the respiration signal of the driver based on at least one of the pattern consistency of the respiration waveform and the change amount of respiration intensity, and obtain the respiration signal of the selected area in real time.

In an embodiment of the present disclosure, the one or more instructions, when executed by the at least one processor 120 individually or collectively, and thus the electronic device 100 may merge respiration signals obtained from each of a plurality of areas and detect abnormal respiration by monitoring the merged respiration signals in real time.

In an embodiment of the present disclosure, the one or more instructions, when executed by the at least one processor 120 individually or collectively, and thus the electronic device 100 may obtain motion information resulting from vibration of the vehicle 1000 or body movement of the driver, and identify a time period in which motion information is detected from the respiration waveforms according to a flow of time of the respiration signal. The one or more instructions, when executed by the at least one processor 120 individually or collectively, and thus the electronic device 100 may correct the respiration signal of the respiration waveform in the identified time period.

In an embodiment of the present disclosure, the one or more instructions, when executed by the at least one processor 120 individually or collectively, and thus the electronic device 100 may obtain a respiration signal regarding rest respiration of the driver when the vehicle 1000 is stopped or drives at a low speed below a preset threshold speed. The one or more instructions, when executed by the at least one processor 120 individually or collectively, and thus the electronic device 100 may detect abnormal respiration by calculating a difference value between a respiration signal of rest respiration and a respiration signal of a driver monitored in real time and determining whether the calculated difference value exceeds a preset threshold value.

In an embodiment of the present disclosure, the display 140 may configured as an instrument cluster display in the vehicle 1000. The one or more instructions, when executed by the at least one processor 120 individually or collectively, and thus the electronic device 100 may display a respiration guide UI on the instrument cluster display.

In an embodiment of the present disclosure, the display 140 may display the respiration waveform of the respiration signal obtained in real time along with a respiration exercise guide.

In an embodiment of the present disclosure, the display 140 may display along with the respiration waveforms of the thoracic respiration signal obtained from the chest movement of the driver and the abdominal respiration signal obtained from the abdominal movement of the driver among the respiration signals. The display 140 may display information regarding the real-time change amount of each of the thoracic respiration signal and the abdominal respiration signal.

In an embodiment of the present disclosure, the one or more instructions, when executed by the at least one processor 120 individually or collectively, and thus the electronic device 100 may determine a time point for displaying the respiration guide UI based on at least one of whether the vehicle 1000 drives autonomously and intervention in driving the vehicle of the driver. The one or more instructions, when executed by the at least one processor 120 individually or collectively, and thus the electronic device 100 may control the display 140 to display the respiration guide UI at the determined time point.

In an embodiment of the present disclosure, the one or more instructions, when executed by the at least one processor 120 individually or collectively, and thus the electronic device 100 may output an alert message indicating an emergency situation through a display 140 when hyperventilation of abnormal respiration is detected. The one or more instructions, when executed by the at least one processor 120 individually or collectively, and thus the electronic device 100 may control driving of the vehicle 1000 to move to the shoulder and stop when there is no interaction with the driver corresponding to the output alert message. The electronic device 100 may further include the communication interface 160. The one or more instructions, when executed by the at least one processor 120 individually or collectively, and thus the electronic device 100 may control the communication interface 160 to make an emergency call for a rescue request.

The present disclosure provides a computer program product including a computer-readable storage medium. For the electronic device 100 to perform an operation of detecting movement of at least one of the chest and the abdomen caused by respiration of the driver of the vehicle 1000 from an image obtained through the camera 110 to obtain a respiration signal of the driver, an operation of monitoring the obtained respiration signal in real time to detect abnormal respiration including at least one of hyperventilation, hypopnea, transient apnea, and dyspnea, and the operation of displaying a respiration guide user interface (UI) that provides a respiration exercise guide to alleviate abnormal respiration by readjusting the respiration of the driver in response to the abnormal respiration being detected, the storage medium may include instructions readable by the electronic device 100.

The program executed by the electronic device 100 described in the present disclosure may be implemented as a hardware component, a software component, and/or a combination of hardware components and software components. The program may be executed by any system capable of executing computer-readable instructions.

Software may include a computer program, code, instructions, or a combination of one or more of these, which may configure a processing device to operate as desired or may individually or collectively command the processing device to operate as desired.

Software may be implemented as a computer program including instructions stored on a computer-readable storage medium. Examples of the computer-readable recording medium include a magnetic storage medium (e.g., read-only memory (ROM), random-access memory (RAM), floppy disk, or hard disk) and an optical readable medium (e.g., CD-ROM or digital versatile disc (DVD)). The computer-readable recording medium may be distributed across network-connected computer systems, allowing computer-readable code to be stored and executed in a distributed manner. The medium is readable by a computer, stored in memory, and may be executed by a processor.

Computer-readable storage media may be provided in the form of non-transitory storage media. Here, the term 'non-transitory storage medium' simply means a tangible device that does not contain a signal (e.g. electromagnetic wave), and the term does not distinguish between cases in which data is stored semi-permanently or temporarily in a storage medium. For example, the 'non-transitory storage medium' may include a buffer in which data is temporarily stored.

A program according to embodiments of the present disclosure may be provided as included in a computer program product. The computer program product may be traded between a seller and a buyer as commodities.

The computer program product may include a software program, and a computer-readable storage medium having the software program stored thereon. For example, the computer program product may include a product in the form of a software program (e.g., a downloadable application) that is distributed electronically by a manufacturer of an electronic device or through an electronic marketplace (e.g., Samsung Galaxy StoreTM and Google Play StoreTM). For electronic distribution, at least a portion of the software program may be stored on a storage medium or temporarily generated. In this case, the storage medium may be a cloud server of the manufacturer of the vehicle 1000 or a server of the manufacturer of the electronic device 100, a server of the electronic market, or a storage medium of a relay server that temporarily stores software programs.

A computer program product may include a storage medium of the server 200 or a storage medium of the other electronic device in a system including the electronic device 100, the server 200 (see FIG. 23 and FIG. 24), and other electronic devices. Alternatively, when there is a third device (e.g., a mobile device such as a smartphone) that is connected to the electronic device 100 through communication, the computer program product may include a storage medium of the third device. Alternatively, the computer program product may include the software program itself, which is transmitted from the electronic device 100 to another electronic device or a third device, or from the third device to the electronic device 100.

In this case, one of the electronic device 100, another electronic device, and a third device (e.g., a mobile device such as a smartphone) may perform the method according to the described embodiments by executing a computer program product. Alternatively, two or more of the electronic device 100, another electronic device, and a third device may perform the method according to the described embodiments in a distributed manner by executing a computer program product.

For example, the electronic device 100 may control another electronic device that is connected to the electronic device 100 to perform the method according to the described embodiments by executing a computer program product stored in the memory 130 (see FIG. 3).

As another example, a third device may control an electronic device connected to the third device in communication to perform the method according to the described embodiment by executing a computer program product.

When the third device executes a computer program product, the third device may download the computer program product from the electronic device 100 and execute the downloaded computer program product. Alternatively, the third device may perform the method according to the described embodiments by executing a computer program product provided in a pre-loaded state.

Although the embodiments have been described by way of limited examples and drawings, those of skill in the art will appreciate that various modifications and variations may be made from the above description. For example, suitable results may be obtained even when the described technologies are performed in a different order than described, and/or components of the described computer system or modules are combined or combined in a different manner than described, or are replaced or substituted by other components or equivalents.

## Claims

1. A method by which an electronic device (100) mounted in a vehicle (1000) detects respiration of a driver of the vehicle (1000) and provides a respiration guide for driver protection, the method comprising:
obtaining, from an image obtained through a camera (110), a respiration signal of the driver by detecting movement of at least one of a chest and an abdomen caused by the respiration of the driver (S210);
detecting abnormal respiration including at least one of hyperventilation, hypopnea, transient apnea, and dyspnea by monitoring the obtained respiration signal in real time (S220); and
in response to the abnormal respiration being detected, displaying a respiration guide user interface (UI) that provides a respiration exercise guide to alleviate the abnormal respiration by readjusting the respiration of the driver (S230).

2. The method of claim 1, wherein the obtaining of the respiration signal (S210) comprises:
dividing a body part of the driver included in the image obtained by the camera (110) into a plurality of areas (S1010);
obtaining a respiration signal including at least one of a respiration waveform and a respiration intensity from each of the plurality of areas by detecting movement of the plurality of divided areas (S1020);
selecting an optimal area among the plurality of areas for monitoring the respiration signal of the driver based on at least one of pattern consistency of the respiration waveform and a change amount of the respiration intensity (S1030); and
obtaining a respiration signal of the selected area in real time (S1040).

3. The method of any one of claim 1 or 2, wherein the obtaining of the respiration signal (S210) further comprises:
obtaining motion information resulting from vibration of the vehicle (1000) or body movement of the driver (S1210);
identifying a time period in which the motion information is detected from a respiration waveform according to a flow of time of the respiration signal (S1220); and
correcting the respiration signal of the respiration waveform in the identified period (S1230).

4. The method of any one of claims 1 to 3, wherein the displaying of the respiration guide UI (S230) comprises displaying the respiration guide UI on an instrument cluster display of the vehicle (1000).

5. The method of any one of claims 1 to 4, wherein the displaying of the respiration guide UI (S230) comprises displaying the respiration waveform of the respiration signal, obtained in real time, along with the respiration exercise guide.

6. The method of any one of claims 1 to 5, wherein the displaying of the respiration guide UI (S230) comprises:
displaying along with a respiration waveform of a thoracic respiration signal obtained from chest movement of the driver and an abdominal respiration signal obtained from abdominal movement of the driver among the respiration signals; and
displaying information regarding a real-time change amount of each of the thoracic respiration signal and the abdominal respiration signal.

7. The method of any one of claims 1 to 6, further comprising:
when hyperventilation of the abnormal respiration is detected, outputting an alert message indicating an emergency situation (S1910);
when there is no interaction of the driver corresponding to the output alert message, controlling driving of the vehicle (1000) to move to a shoulder and stop (S1920); and
making an emergency call for a rescue request (S1930).

8. An electronic device (100) in a vehicle (1000), which detects respiration of a driver and provides a guide for driver protection, the electronic device (100) comprising:
a display (140);
a camera (110) configured to obtain an image by photographing the driver;
at least one processor (120) including a processing circuit; and
memory (130) storing one or more instructions,
wherein the one or more instructions, when executed by the at least one processor (120) individually or collectively, cause the electronic device (100) to:
obtain, from an image obtained through the camera (110), a respiration signal of the driver by detecting movement of at least one of a chest and an abdomen caused by the respiration of the driver;
detect abnormal respiration including at least one of hyperventilation, hypopnea, transient apnea, and dyspnea by monitoring the obtained respiration signal in real time; and
in response to the abnormal respiration being detected, display a respiration guide user interface (UI) that provides a respiration exercise guide to alleviate the abnormal respiration by readjusting the respiration of the driver.

9. The electronic device (100) of claim 8, wherein the one or more instructions, when executed by the at least one processor (120) individually or collectively, cause the electronic device (100) to:
divide a body part of the driver included in the image obtained by the camera (110) into a plurality of areas;
obtain a respiration signal including at least one of a respiration waveform and a respiration intensity from each of the plurality of areas by detecting movement of the plurality of divided areas;
select an optimal area among the plurality of areas for monitoring the respiration signal of the driver based on at least one of pattern consistency of the respiration waveform and a change amount of the respiration intensity; and
obtain a respiration signal of the selected area in real time.

10. The electronic device (100) of any one of claim 8 or 9, wherein the one or more instructions, when executed by the at least one processor (120) individually or collectively, cause the electronic device (100) to:
obtain motion information resulting from vibration of the vehicle (1000) or body movement of the driver;
identify a time period in which the motion information is detected from a respiration waveform according to a flow of time of the respiration signal; and
correct the respiration signal of the respiration waveform in the identified period.

11. The electronic device (100) of any one of claims 8 to 10, wherein the display (140) is configured as an instrument cluster display in the vehicle (1000), and
the one or more instructions, when executed by the at least one processor (120) individually or collectively, cause the electronic device (100) to:
display the respiration guide UI on the instrument cluster display.

12. The electronic device (100) of any one of claims 8 to 11, wherein the display (140) is configured to display the respiration waveform of the respiration signal, obtained in real time, along with the respiration exercise guide.

13. The electronic device (100) of any one of claims 8 to 12, wherein the display (140) is configured to:
display along with a respiration waveform of a thoracic respiration signal obtained from chest movement of the driver and an abdominal respiration signal obtained from abdominal movement of the driver among the respiration signals; and
display information regarding a real-time change amount of each of the thoracic respiration signal and the abdominal respiration signal.

14. The electronic device (100) of any one of claims 8 to 13, further comprising a communication interface (160),
wherein the one or more instructions, when executed by the at least one processor (120) individually or collectively, cause the electronic device (100) to:
when hyperventilation and dyspnea of the abnormal respiration is detected, output an alert message indicating an emergency situation through the display (140);
when there is no interaction of the driver corresponding to the alert message, control driving of the vehicle (1000) to move to a shoulder and stop; and
control the communication interface (160) to make an emergency call for a rescue request.

15. A computer program product comprising a computer-readable storage medium,
wherein the storage medium includes instructions executed by an electronic device (100) mounted on a vehicle (1000) to cause the electronic device (100) to perform:
obtaining, from an image obtained through a camera (110), a respiration signal of a driver by detecting movement of at least one of a chest and an abdomen caused by respiration of the driver;
detecting abnormal respiration including at least one of hyperventilation, hypopnea, transient apnea, and dyspnea by monitoring the obtained respiration signal in real time; and
in response to the abnormal respiration being detected, displaying a respiration guide user interface (UI) that provides a respiration exercise guide to alleviate the abnormal respiration by readjusting the respiration of the driver.
